# EUROPÄISCHE PATENTSCHRIFT

(11) **EP 3 259 295 B1**
(45) Veröffentlichungstag und Bekanntmachung des Hinweises auf die Patenterteilung: **18.12.2019**
(21) Anmeldenummer: 16704676.2
(22) Anmeldetag: 17.02.2016
(51) Int. Cl.: C08G 18/00, C08G 101/00, C08J 9/02, C08J 9/12

(54) **HOCHTEMPERATURBESTÄNDIGE SCHAUMSTOFFE MIT HOHER FLAMMWIDRIGKEIT**
HIGH TEMPERATURE RESISTANT FOAMS HAVING A HIGH FLAME RESISTANCE
MOUSSES RÉSISTANTES AUX TEMPÉRATURES ÉLEVÉES AYANT UNE HAUTE RÉSISTANCE AUX FLAMMES

(30) Priorität: 20.02.2015 EP 15155918
(43) Veröffentlichungstag der Anmeldung: 27.12.2017
(73) Patentinhaber: Covestro Deutschland AG, 51373 Leverkusen (DE); BASF SE, 67056 Ludwigshafen (DE)
(72) Erfinder: HUPKA, Florian, 40589 Düsseldorf (DE); HAGEN, Torsten, 45257 Essen (DE); NORDMANN, Peter, 41539 Dormagen (DE); GACA, Josip, 51377 Leverkusen (DE); KRÄMER, Roland, 200120 Pudong Shanghai (CN); MENON, Sindhu, 200135 Pudong Shanghai (CN)
(74) Vertreter: dompatent von Kreisler Selting Werner - Partnerschaft von Patent- und Rechtsanwälten mbB
(86) Internationale Anmeldenummer: PCT/EP2016/053381
(87) Internationale Veröffentlichungsnummer: WO 2016/131880

(56) Entgegenhaltungen:
- WO-A1-2012/080185
- DE-A1- 1 915 766
- DE-A1- 3 713 771
- DE-A1- 3 824 685

## Beschreibung

Die vorliegende Erfindung betrifft hochtemperaturbeständige und flammwidrige Schaumstoffe und deren Herstellung durch Umsetzung von Reaktionsgemischen aus organischen Polyisocyanaten und organischen Polyepoxiden unter Zugabe von Treibmitteln und gegebenenfalls Katalysatoren in den endgültigen geschäumten nicht mehr schmelzbaren Endzustand (im folgenden genannt "EPIC-Schaumstoff' bzw. "EPIC-Schaum") sowie deren Verwendung.

In frühen Untersuchungen beschreiben DE 37 13 771, US 3 793 236, US 4 129 695 und US 3 242 108 die Herstellung von Schäumen aus Polyisocyanaten und Polyepoxiden. Teilweise wird, wie z.B. in US 3 849 349 oder DE 38 24 685, die Zugabe von weiteren H-aktiven Substanzen beschrieben. Dies führt zu unerwünscht hohen Konzentrationen an Urethangruppen, welche die Vorteile des EPIC-Schaums reduzieren. Als mögliche Treibmittel werden die in der Polyurethanchemie bekannten Treibmittel gelistet und vorzugsweise FCKW in den Beispielen verwendet. Der aktuellere Stand der Technik beschreibt die bevorzugte Herstellung solcher Schaumstoffe aus Reaktionsgemischen organischer Polyisocyanate und organischer Polyepoxide über eine Zwischenstufe enthaltend teilweise trimerisierte Isocyanuratgruppen (=Intermediat), welche mit Hilfe von Stoppern stabilisiert wird. In diesem Fall werden die hochtemperaturbeständigen Schaumstoffe durch Umsetzung von Reaktionsgemischen aus organischen Polyisocyanaten, organischen Polyepoxiden, Katalysatoren und Stoppern zu einem lagerstabilen höherviskosen Intermediat (,Vortrimerisierung') und der Umsetzung dieses höherviskosen Intermediats durch Zugabe von Treibmitteln und einem die Isocyanat/Epoxid-Reaktion spontan beschleunigenden Katalysator in den endgültigen geschäumten nicht mehr schmelzbaren Endzustand erhalten.

Die Herstellung von lagerstabilen vortrimerisierten Intermediaten unter Zugabe eines alkylierend wirkenden Inhibierungsmittels als Stopper wird zunächst in EP 0 331 996 und EP 0 272 563 beschrieben. Die Herstellung eines EPIC-Schaumstoffes aus einem über ein mit alkylierend wirkenden Sulfonsäurealkylestern als Stopper versetztes Intermediat wird in DE 39 38 062 A1 offenbart. Es wird beschrieben, dass als Isocyanatkomponente beliebige organische Polyisocyanate eingesetzt werden können, insbesondere Polyisocyanatgemische der Diphenylmethanreihe. Neben den 2,4'-Isomeren kann eine unter mehreren anderen als bevorzugt genannten Polyisocyanat-Komponente weitere isomere bzw. homologe Polyisocyanate der Diphenylmethanreihe enthalten und von 10 bis zu 60 Gew.-%, bezogen auf Gesamtgemisch an Polyisocyanaten, an höherkernigen Polyphenyl-polymethylen-polyisocyanaten.

Die Qualität der so hergestellten Schäume lässt sich gemäß WO 2012/80185 A1 und WO 2012/150201 A1 entscheidend verbessern, wenn bestimmte Treibmittel für die Herstellung der EPIC-Schaumstoffe verwendet werden. Die Herstellung des EPIC-Schaums erfolgt nach der Lehre dieser Dokumente ebenfalls bevorzugt über die Umsetzung der Edukte in Gegenwart eines als Stopper wirkenden Stabilisators. Als bevorzugt eingesetzte Polyisocyanat-Komponente handelt es sich entweder um Gemische aus 2,4'-MDI mit 4,4'-MDI und gegebenenfalls 0 bis 20 Gew.-%, bezogen auf das Gesamtgemisch an 2,2'-MDI, oder aber um Gemische dieser Isomeren mit höherkernigen oligomeren MDI, wobei letzteres in den Gemischen im allgemeinen von 10 bis zu 60 Gew.-% bezogen auf Gesamtgemisch an Polyisocyanaten vorliegt. In den Beispielen werden Gemische aus isomeren Monomer-MDI Typen verwendet.

Die im Stand der Technik beschriebenen hochtemperaturbeständigen Schaumstoffe enthaltend Reaktionsprodukte der EPIC-Reaktion sind bereits für ihre guten mechanischen Eigenschaften und ihre hohe Temperaturstabilität bekannt. Sie weisen auch bereits eine im Vergleich zu PolyurethanSchäumen erschwerte Entflammbarkeit auf. Allerdings ist das Herstellungsverfahren über das zwei-Stufen-Verfahren recht aufwendig. Schließlich sind die mechanischen Eigenschaften und insbesondere das Brandverhalten der Schaumstoffe mit und insbesondere ohne Zusatz von Flammschutzmittel weiter verbesserungswürdig.

Der Erfindung lag die Aufgabe zugrunde, hochtemperaturbeständige EPIC-Strukturen enthaltende Schaumstoffe mit sehr guten mechanischen Eigenschaften, geringer Wärmeleitfähigkeit und gegenüber dem Stand der Technik verbesserten flammwidrigen Eigenschaften zur Verfügung zu stellen.

Wie oben dargelegt, wird in dem aktuellen Stand der Technik zur Herstellung von EPIC-Strukturen enthaltenen Schaumstoffen dem Fachmann ein Verfahren über die intermediäre Herstellung des Reaktionsharzes aus Polyepoxid und Polyisocyanat, enthaltend Isocyanurat-Strukturen aus der Trimerisierungsreaktion, unter Verwendung von Stabilisatoren (Stoppern) empfohlen. Der Fachmann entnimmt dem Stand der Technik auch, dass bevorzugt Polyisocyanatmischungen enthaltend einen überwiegenden Anteil an monomeren MDI - Isomeren verwendet werden. Keines der Dokumente aus dem Stand der Technik beschäftigt sich mit der weiteren Verbesserung der Flammwidrigkeit von EPIC-Schaumstoffen.

Überraschend wurde nun gefunden, dass durch die kombinierte Auswahl bestimmter Polyisocyanate, des Treibmittels und durch den Verzicht auf den Einsatz von als Stopper wirkenden Stabilisatoren hochtemperaturbeständige EPIC-Schaumstoffe erhalten werden können, deren Flammwidrigkeiten diejenigen der nach dem Stand der Technik hergestellten EPIC-Schäume deutlich übertreffen.

Gegenstand der Erfindung sind hochtemperaturbeständige Schaumstoffe erhältlich durch Umsetzung von
a) mindestens einem Gemisch aus organischen Polyisocyanaten und
b) mindestens einer, mindestens zwei Epoxidgruppen aufweisenden organischen Verbindung in einer solchen Menge, die einem Äquivalentverhältnis von Isocyanatgruppen zu Epoxidgruppen von 1,2 : 1 bis 500 : 1 entspricht,
c) gegebenenfalls mindestens einem die Isocyanat/Epoxid-Reaktion beschleunigenden Katalysator
e) gegebenenfalls in Gegenwart von Hilfs- und Zusatzstoffen, optional enthaltend mehrfunktionelle Hydroxyl- oder Aminogruppenhaltige Verbindungen e1),
f) chemischen und/oder physikalischen Treibmitteln
dadurch gekennzeichnet,
dass das Gemisch aus organischen Polyisocyanaten a) mehr als 50 Gew.-%, bevorzugt mehr als 60 Gew.-%, bezogen auf die Gesamtmenge an Polyisocyanaten, Polyphenyl-polymethylen-polyisocyanate mit einer Funktionalität f > 2 enthält,
dass die organische Verbindung b) einen oder mehrere Polyglycidylether ausgewählt aus der Gruppe bestehend aus Polyglycidylether von Bisphenol A, Bisphenol F und Novolak enthält,
dass die chemischen und/oder physikalischen Treibmittel f) mindestens eine Carbonsäure ausgewählt aus Ameisensäure und Essigsäure enthalten oder dass das Treibmittel aus Wasser und optional einer oder mehrere Verbindung(en) ausgewählt aus der Gruppe enthaltend Kohlenwasserstoffe, Fluor-Kohlenstoffe und Fluor-Kohlenwasserstoffe besteht,
dass die Menge der Komponente a) so bemessen ist, dass das Äquivalentverhältnis von Isocyanatgruppen der Komponente a) zur Summe der Epoxidgruppen der Komponente b), Hydroxylgruppen und/oder Aminogruppen der Komponente e1) und den gegebenenfalls in der Komponente b) vorliegenden Hydroxylgruppen mindestens bei 1,2 : 1 liegt,
und dass die Umsetzung in Abwesenheit einer als Stopper wirkenden Komponente d) erfolgt.

Bei der als Stopper wirkenden Komponente d) (auch als Stabilisatoren für die intermediäre Stufe des Reaktionsharzes bezeichnet) handelt es sich um sogenannte Katalysatorengifte für die Katalysatoren c). Bei dieser handelt es sich insbesondere um solche, welche ausgewählt sind aus der Gruppe bestehend aus organischen Sulfonsäureestern, Methyljodid, Dimethylsulfat, Benzolsulfonsäureanhydrid, Benzolsulfonsäurechlorid, Benzolsulfonsäure, Trimethylsilyltrifluormethansulfonat, dem Reaktionsprodukt der Umsetzung von Benzolsulfonsäure mit Epoxiden sowie Mischungen daraus.

Ein weiterer Gegenstand der Erfindung ist ein Verfahren zur Herstellung der erfindungsgemäßen hochtemperaturbeständigen Schaumstoffe durch Umsetzung von
a) mindestens einem Gemisch aus organischen Polyisocyanaten und
b) mindestens einer, mindestens zwei Epoxidgruppen aufweisenden organischen Verbindung in einer solchen Menge, die einem Äquivalentverhältnis von Isocyanatgruppen zu Epoxidgruppen von 1,2 : 1 bis 500 : 1 entspricht,
c) gegebenenfalls mindestens einem die Isocyanat/Epoxid-Reaktion beschleunigenden Katalysator
e) gegebenenfalls in Gegenwart von Hilfs- und Zusatzstoffen, optional enthaltend mehrfunktionelle Hydroxyl- oder Aminogruppenhaltige Verbindungen e1),
f) chemischen und/oder physikalischen Treibmitteln
dadurch gekennzeichnet,
dass das Gemisch aus organischen Polyisocyanaten a) mehr als 50 Gew.-%, bevorzugt mehr als 60 Gew.-% und besonders bevorzugt mehr als 64 Gew.-%, bezogen auf die Gesamtmenge an Polyisocyanaten, Polyphenyl-polymethylen-polyisocyanate mit f > 2 enthält,
dass die organische Verbindung b) einen oder mehrere Polyglycidylether ausgewählt aus der Gruppe bestehend aus Polyglycidylether von Bisphenol A, Bisphenol F und Novolak enhält,
dass die chemischen und/oder physikalischen Treibmitteln f) mindestens eine Carbonsäure ausgewählt aus Ameisensäure und Essigsäure enthalten oder dass das Treibmittel aus Wasser und optional einer oder mehreren Verbindung(en) ausgewählt aus der Gruppe enthaltend Kohlenwasserstoffe, Fluor-Kohlenstoffe und Fluor-Kohlenwasserstoffe besteht,
dass die Menge der Komponente a) so bemessen ist, dass das Äquivalentverhältnis von Isocyanatgruppen der Komponente a) zur Summe der Epoxidgruppen der Komponente b), Hydroxylgruppen und/oder Aminogruppen der Komponente e1) und den gegebenenfalls in der Komponente b) vorliegenden Hydroxylgruppen mindestens bei 1,2 : 1 liegt, und dass die Umsetzung in Abwesenheit einer als Stopper wirkenden Komponente d) erfolgt. Nach dem Aufschäumen in den geschäumten Zustand kann eine nachträgliche Temperaturbehandlung zwischen 70 und 250°C ("Tempern") durchgeführt werden.

Ein weiterer Gegenstand der Erfindung ist die Verwendung der erfindungsgemäßen hochtemperaturbeständigen Schaumstoffe, gegebenenfalls nach Temperung, als Füllschaum für Hohlräume, als Füllschaum zur Elektroisolierung, als Kern von Sandwich-Konstruktionen, zur Herstellung von Konstruktionsmaterialien für Innen- und Außenanwendungen jeglicher Art, zur Herstellung von Konstruktionsmaterialien für den Fahrzeug-, Schiff-, Flugzeug- und Raketenbau, zur Herstellung von Flugzeuginnen- und -außenbauteilen, zur Herstellung von Dämmmaterialien jeglicher Art, zur Herstellung von Dämmplatten, Rohr- und Behälterisolierungen, zur Herstellung von schallabsorbierenden Materialien, zum Einsatz in Motorräumen, zur Herstellung von Schleifscheiben und zur Herstellung von Hochtemperaturisolierungen und schwer entflammbaren Isolierungen.

Ein weiterer Gegenstand der Erfindung ist die Verwendung der schaumfähigen Mischungen vor dem Ende der Verschäumung zum erfindungsgemäßen hochtemperaturbeständigen Schaumstoff zum Verkleben von Substraten, zum Verkleben von Stahl-, Aluminium- und Kupferblechen, Kunststoffplatten und Polybutylenterephthalat-Platten.

Ein weiterer Gegenstand der Erfindung sind Hohlräume, Elektroisolierungen, Kerne von Sandwich-Konstruktionen, Sandwich-Konstruktionen, Konstruktionsmaterialien für Innen- und Außenanwendungen jeglicher Art, Konstruktionsmaterialien für den Fahrzeug-, Schiff-, Flugzeug- und Raketenbau, Flugzeuginnen- und -außenbauteile, Dämmmaterialien jeglicher Art, Dämmplatten, Rohr- und Behälterisolierungen, schallabsorbierende Materialien, Dämm- und Isoliermaterialien in Motorräumen, Schleifscheiben, Hochtemperaturisolierungen und schwer entflammbare Isolierungen, welche dadurch gekennzeichnet sind, dass sie die erfindungsgemäßen hochtemperaturbeständigen Schaumstoffe enthalten oder aus ihnen bestehen.

Ein weiterer Gegenstand der Erfindung sind Verklebungen von Substraten, beispielsweise Stahl-, Aluminium- und Kupferblechen, Kunststoffplatten, z.B. Polybutylenterephthalat-Platten, welche dadurch gekennzeichnet sind, dass sie die erfindungsgemäßen hochtemperaturbeständigen Schaumstoffe enthalten oder aus ihnen bestehen.

Bevorzugte Ausführungsformen finden sich in den Unteransprüchen.

"Hochtemperaturbeständiger Schaumstoff" bedeutet im Sinne dieser Anmeldung, dass der "maximum average rate of heat emission" - Wert (MARHE) gemessen nach DIN EN ISO 5660-1 mit einer externen Strahlungsintensität von 50 kW/m² < 100 beträgt und damit niedriger ist als der durchschnittliche Wert von herkömmlichen Polyurethan - und Polyisocyanurat - Schaumstoffen ohne Flammschutzmittel ist.

Bei dem Gemisch aus organischen Polyisocyanaten a) handelt es sich um Polyisocyanatgemische enthaltend > 50 Gew.-%, bevorzugt > 55 Gew.-%, besonders bevorzugt > 60 Gew.-% und ganz besonders bevorzugt ≥ 64 Gew.-%, bezogen auf Gesamtgemisch a), an höherkernigen Polyphenyl-polymethylen-polyisocyanaten. Bei den höherkernigen Polyphenyl-polymethylen-polyisocyanaten (im Folgenden: "oligomeres MDI" genannt) handelt es sich um Gemische höherkerniger Homologe des Diphenyl-methylen-diisocyanates, die eine NCO - Funktionalität f > 2 aufweisen und folgende Strukturformel aufweisen: C₁₅H₁₀N₂O₂ [C₈H₅NO]ₙ wobei n = ganze Zahl > 0, bevorzugt n = 1, 2, 3 und 4.

In einer Ausführungsform enthält das oligomere MDI bezogen auf das Gesamtgewicht der analytisch über HPLC zu identifizierbaren Homologen und Isomeren 15 - 45 Gew.-%, bevorzugt 20 - 45 Gew.-% des Triphenyl-dimethylen-triisocyanats (C₁₅H₁₀N₂O₂ [C₈H₅NO], f=3), 5 - 30 Gew.-%, bevorzugt 5 - 25 Gew.-% Tetraphenyl-trimethylen-tetraisocyanats (C₁₅H₁₀N₂O₂ [C₈H₅NO]₂, f=4) und 0 - 15 Gew.-% Pentaphenyl-tetramethylen-pentaisocyanat, wobei die Summe 100 Gew.-% ergibt. Höherkernige Homologe (C₁₅H₁₀N₂O₂ [C₈H₅NO]ₘ, m=ganze Zahl ≥ 4) können ebenfalls im Gemisch aus organischen Polyisocyanaten a) enthalten sein.

Weitere Bestandteile des Polyisocyanatgemisches können bevorzugt die monomeren Polyisocyanate des Diphenylmethans (im Folgenden: "monomeres MDI") sein, hierbei handelt es sich um die Isomeren 2,2'-Diisocyanat-diphenylmethan (2,2'-MDI), 2,4'-Diisocyanatodiphenylmethan (2,4'-MDI) und 4,4'-Diisocyanatodiphenylmethan (4,4'-MDI). Bevorzugt enthält das monomere MDI 0-5 % 2,2 MDI, 0-55 % 2,4 MDI und 40-100% 4,4 MDI, bezogen auf die Gesamtmenge an monomeren MDI.

Bevorzugt besteht das Polyisocyanatgemisch a) aus einer Mischung aus oligomeren MDI und monomerem MDI (im Folgenden "polymeres MDI" genannt). Polymeres MDI ist bekannt und wird häufig als Polyphenylpolymethylenpolyisocyanat bezeichnet. Der Anteil von oligomeren MDI im polymeren MDI beträgt > 50 Gew.-%, bevorzugt > 55 Gew.-%, besonders bevorzugt > 60 Gew.-% und ganz besonders bevorzugt ≥ 64 Gew.-%.

Ein bevorzugtes Polyisocyanatgemisch a) weist eine NCO - Funktionalität f von 2,3 bis 4, bevorzugt 2,5 bis 3,8, besonders bevorzugt 2,7 bis 3,5 auf.

Sind neben MDI - Typen keine weiteren Polyisocyanate anwesend, weist ein ebenfalls bevorzugtes Polyisocyanatgemisch a) bestehend aus einer Mischung aus oligomeren MDI und monomerem MDI einen NCO - Gehalt von 28 bis 33,6 Gew.-%, bevorzugt 29 bis 32 Gew.-% und besonders bevorzugt von 29,5 bis 31,5 Gew.-% auf. Die gewünschte Zusammensetzung eines solchen Polyisocyanatgemisches kann beispielsweise durch Phosgenierung von Anilin-Formaldehyd-Kondensaten (GB 874 430 und GB 848 671), fraktionierende Destillation und Rückvermischen der Destillationsprodukte erhalten werden.

In einer bevorzugten Ausführungsform enthält die Polyisocyanatkomponente a) nur aromatische Polyisocyanate.

In einer Ausführungsform kann die Polyisocyanatkomponente a) weiterhin beliebige organische Polyisocyanate der aus der Polyurethanchemie an sich bekannten Art enthalten. Geeignet sind beispielsweise aliphatische, cycloaliphatische, araliphatische, aromatische und heterocyclische Polyisocyanate, wie sie z.B. von W. Siefken in Justus Liebigs Annalen der Chemie, 562, Seiten 75 bis 136, beschrieben werden, beispielsweise solche der Formel
Q(NCO)n, in der n = 2-4, vorzugsweise 2,
und
Q einen aliphatischen Kohlenwasserstoffrest mit 2-18, vorzugsweise 6-10 C-Atomen, einen aromatischen Kohlenwasserstoffrest mit 6-15, vorzugsweise 6-13 C-Atomen, oder einen araliphatischen Kohlenwasserstoffrest mit 8-15, vorzugsweise 8-13 C-Atomen, bedeuten, z.B. Ethylen-diisocyanat, 1,4-Tetramethylendiisocyanat, 1,6-Hexamethylendiisocyanat, 1,12-Dodecandiisocyanat, Cyclobutan-1,3-diisocyanat, Cyclohexan-1,3- und -1,4-diisocyanat sowie beliebige Gemische dieser Isomeren. 1-Isocyanato-3,3,5-trimethyl-5-isocyanatomethylcyclohexan (DE-Auslegeschrift 1 202 785, US-Patentschrift 3 401 190), 2,4- und 2,6-Hexahydrotoluylendiisocyanat sowie beliebige Gemische dieser Isomeren, Hexahydro-1,3- und/oder -1,4-phenylendiisocyanat, Perhydro-2,4'- und/oder -4,4'-diphenylmethandiisocyanat, 1,3- und 1,4-Phenylendiisocyanat, 2,4- und 2,6-Toluylendiisocyanat sowie beliebige Gemische dieser Isomeren, Diphenylmethan-2,4- und/oder -4,4'-diisocyanat, Naphthylen-1,5-diisocyanat.

Ferner kommen beispielsweise erfindungsgemäß in Frage: m- und p-Isocyanatophenylsulfonylisocyanate (US 3 454 606), perchlorierte Arylpolyisocyanate, (US 3 277 138), Carbodiimidgruppen aufweisende Polyisocyanate (US 3 152 162), Norbornan-Diisocyanate (US 3 492 330), Allophanatgruppen aufweisende Polyisocyanate, (GB 994 890), Isocyanuratgruppen aufweisende Polyisocyanate, (US 3 001 973), Urethangruppen aufweisende Polyisocyanate, (US 3 394 164 und 3 644 457), acylierte Harnstoffgruppen aufweisende Polyisocyanate (DE-PS 1 230 778), Biuretgruppen aufweisende Polyisocyanate, (US 3 124 605, 3 201 372 und 3 124 605), durch Telomerisationsreaktionen hergestellte Polyisocyanate (US 3 654 106), Estergruppen aufweisende Polyisocyanate, (US 3 567 763), Umsetzungsprodukte der obengenannten Isocyanate mit Acetalen (DE-PS 1 072 385) und polymere Fettsäureester enthaltende Polyisocyanate (US 3 455 883). Es ist auch möglich, die bei der technischen Isocyanatherstellung anfallenden, Isocyanatgruppen aufweisenden Destillationsrückstände, gegebenenfalls gelöst in einem oder mehreren der vorgenannten Polyisocyanate, einzusetzen. Ferner ist es möglich, beliebige Mischungen der vorgenannten Polyisocyanate zu verwenden. Bevorzugt werden in der Regel die technisch leicht zugänglichen Polyisocyanate, z.B. das 2,4- und 2,6-Toluylendiisocyanat sowie beliebige Gemische dieser Isomeren ("TDI"), und Carbodiimidgruppen, Urethangruppen, Allophanatgruppen, Isocyanuratgruppen, Harnstoffgruppen oder Biuretgruppen aufweisende Polyisocyanate ("modifizierte Polyisocyanate"), insbesondere solche modifizierten Polyisocyanate, die sich vom 2,4- und/oder 2,6-Toluylendiisocyanat bzw. vom 4,4'- und/oder 2,4'-Diphenyl-methandiisocyanat ableiten.

Bei der Epoxidgruppen enthaltenden Komponente b) handelt es sich um beliebige, mindestens zwei Epoxidgruppen aufweisende aliphatische, cycloaliphatische, aromatische und/oder heterocyclische Verbindungen. Die bevorzugten als Komponente b) geeigneten Epoxide weisen pro Molekül 2 bis 4, vorzugsweise 2 Epoxidgruppen und ein Epoxidäquivalentgewicht von 90 bis 500 g/eq, vorzugsweise 140 bis 220 g/eq auf.

Besonders bevorzugt ist die Epoxidgruppen enthaltenden Komponente b) eine beliebige, mindestens zwei Epoxidgruppen aufweisende aromatische Verbindung.

Geeignete Polyepoxide sind beispielsweise Polyglycidylether mehrwertiger Phenole, beispielsweise von Brenzkatechin, Resorcin, Hydrochinon, 4,4'-Dihydroxydiphenylpropan (Bisphenol A), von 4,4'-Dihydroxy-3,3'-dimethyldiphenylmethan, von 4,4'-Dihydroxydiphenylmethan (Bisphenol F), 4,4'-Dihydroxydiphenylcyclohexan, von 4,4'-Dihydroxy-3,3'-dimethyl-diphenylpropan, von 4,4'-Dihydroxydiphenyl, aus 4,4'-Dihydroxydiphenylsulfon (Bisphenol S), von Tris-(4-hydroxyphenyl)-methan, den Chlorierungs- und Bromierungsprodukten der vorstehend genannten Diphenole, von Novolaken (d.h. aus Umsetzungsprodukten von ein- oder mehrwertigen Phenolen und/oder Kresolen mit Aldehyden, insbesondere Formaldehyd, in Gegenwart saurer Katalysatoren im Equivalenzverhältnis von kleiner 1 : 1),), von Diphenolen, die durch Veresterung von 2 Mol des Natriumsalzes einer aromatischen Oxycarbonsäure mit einem Mol eines Dihalogenalkans oder Dihalogendialkylesters erhalten wurden (vgl. britisches Patent 1 017 612) oder von Polyphenolen, die durch Kondensation von Phenolen und langkettigen, mindestens zwei Halogenatome enthaltenden Halogenparaffinen erhalten wurden (vgl. GB-PS 1 024 288). Weiterhin seien genannt: Polyepoxidverbindungen auf der Basis von aromatischen Aminen und Epichlorhydrin, z.B. N-Di-(2,3-epoxypropyl)-anilin, N,N'-Dimethyl-N,N'-diepoxypropyl-4,4'-diaminodiphenylmethan, N,N-Diepoxypropyl-4-amino-phenylglycidether (vgl. GB-PS 772 830 und 816 923).

Außerdem kommen in Frage: Glycidylester mehrwertiger aromatischer, aliphatischer und cycloaliphatischer Carbonsäuren, beispielsweise Phthalsäurediglycidylester, Isophthalsäurediglycidylester, Terephthalsäurediglycidylester, Adipinsäurediglycidylester und Glycidylester von Umsetzungsprodukten aus 1 Mol eines aromatischen oder cycloaliphatischen Dicarbonsäureanhydrids und 1/2 Mol eines Diols bzw. 1/n Mol eines Polyols mit n Hydroxylgruppen oder Hexahydrophthalsäurediglycidylester, die gegebenenfalls mit Methylgruppen substituiert sein können.

Glycidylether mehrwertiger Alkohole, beispielsweise von 1,4-Butandiol (Araldite® DY-D, Huntsman), 1,4-Butendiol, Glycerin, Trimethylolpropan (Araldite® DY-T/CH, Huntsman), Pentaerythrit und Polyethylenglykol können ebenfalls verwendet werden. Von weiterem Interesse sind Triglycidylisocyanurat, N,N'-Diepoxypropyloxyamid, Polyglycidylthioether aus mehrwertigen Thiolen, wie beispielsweise aus Bismercaptomethylbenzol, Diglycidyltrimethylentrisulfon, Polyglycidylether auf Basis von Hydantoinen.

Schließlich können auch Epoxidierungsprodukte von mehrfach ungesättigten Verbindungen eingesetzt werden, wie vegetabilischen Ölen und deren Umwandlungsprodukten. Epoxidierungsprodukte von Di- und Polyolefinen, wie Butadien, Vinylcyclohexan, 1,5-Cyclooctadien, 1,5,9-Cyclododecatrien, Polymerisaten und Mischpolymerisaten, die noch epoxidierbare Doppelbindungen enthalten, z.B. auf Basis von Polybutadien, Polyisopren, Butadien-Styrol-Mischpolymerisaten, Divinylbenzol, Dicyclopentadien, ungesättigten Polyestern, ferner Epoxidierungsprodukte aus Olefinen, welche durch Diels-Alder-Addition zugänglich sind und anschließend durch Epoxidierung mit Perverbindung in Polyepoxide überführt werden oder aus Verbindungen, die zwei Cyclopenten- oder Cyclohexenringe über Brückenatome- oder Brückenatomgruppen verknüpft enthalten, können ebenfalls verwendet werden.

Außerdem können auch Polymerisate von ungesättigten Monoepoxiden eingesetzt werden, beispielsweise aus Methacrylsäureglycidylester oder Allylglycidylether.

Vorzugsweise werden erfindungsgemäß folgende Polyepoxidverbindungen oder deren Mischungen als Komponente b) verwendet:
Polyglycidylether mehrwertiger Phenole, insbesondere von Bisphenol A (Araldit® GY250, Huntsman, Ruetapox® 0162, Bakelite AG; Epikote® Resin 162, Hexion Specialty Chemicals GmbH; Eurepox 710, Brenntag GmbH) und , Araldit® GY250, Huntsman oder Bisphenol F (4,4'-Dihydroxy-diphenyl-methan, Araldit® GY281, Huntsman), Polyepoxidverbindungen auf der Basis von aromatischen Aminen, insbesondere Bis(N-epoxypropyl)anilin, N,N'-Dimethyl-N,N'-diepoxypropyl-4,4'-diaminodiphenylmethan und N,N-Diepoxypropyl-4-aminophenylglycidylether; Polyglycidylester aus cycloaliphatischen Dicarbonsäuren, insbesondere Hexahydrophthalsäurediglycidylester und Polyepoxide aus dem Umsetzungsprodukt von n Molen Hexahydrophthalsäureanhydrid und 1 Mol eines Polyols mit n Hydroxylgruppen (n = ganze Zahl von 2-6), insbesondere 3 Mol Hexahydrophthalsäureanhydrid und einem Mol 1,1,1-Trimethylolpropan; 3,4-Epoxycyclohexylmethan-3, 4-epoxycyclohexan-carboxylat.

Polyglycidylether von Bisphenol A und Bisphenol F sowie von Novolaken sind ganz besonders bevorzugt.

Die Verwendung von Polyglycidylethern von Bisphenol F ist ganz besonders bevorzugt.

Erfindungsgemäß muss die Komponente b) einen oder mehrere Polyglycidylether ausgewählt aus der Gruppe bestehend aus Polyglycidylether von Bisphenol A, Bisphenol F und Novolak enthalten.

Flüssige Polyepoxide oder niedrigviskose Diepoxide, wie Bis-(N-epoxypropyl)-anilin oder Vinylcyclohexandiepoxid können in besonderen Fällen die Viskosität von bereits flüssigen Polyepoxiden weiter herabsetzen oder feste Polyepoxide in flüssige Mischungen überführen.

Die Komponente b) wird in einer solchen Menge eingesetzt, die einem Äquivalentverhältnis von Isocyanatgruppen zu Epoxidgruppen von 1,2 : 1 bis 500 : 1, vorzugsweise 3 : 1 bis 65 : 1, insbesondere 3 : 1 bis 30 : 1, besonders bevorzugt 3 : 1 bis 15 : 1, entspricht.

Als Katalysatoren c) können insbesondere beliebige mono- oder polyfunktionelle organische Amine mit tertiären Aminogruppen eingesetzt werden.

Geeignete Amine der genannten Art weisen im Allgemeinen ein Molekulargewicht von bis zu 353 g/mol, vorzugsweise von 101 bis 185 g/mol auf. Bevorzugt sind solche tertiären Amine, die bei der Reaktionstemperatur der ersten Reaktionsstufe flüssig sind. Typische Beispiele geeigneter Amine sind Triethylamin, Tri-n-butylamin, Dimethylcyclohexylamin, N,N,N',N'-Tetramethylethylendiamin, N,N-Dimethylbenzylamin, Triethylendiamin oder Dimethyloctylamin, N-Methylmorpholin und Bis-(N,N-dimethylaminoethyl)-ether, bevorzugt ist N,N-Dimethylbenzylamin. Außerdem geeignet sind z.B. Pentamethyl-diethylentriamin, N-Methyl-N'-dimethylaminoethyl-piperazin, N,N-Diethylethanolamin sowie Silamorpholin. Bevorzugt geeeignet sind auch insbesondere Dimethylbenzylamin, Methyldibenzylamin, Bortrichlorid-tert.-Amin-Addukte sowie N-[3-(Dimethylamino)propyl]formamid.

Zu den geeigneten Aminen zählen auch solche, die neben der Katalysewirkung auch eine Treibwirkung besitzen. In diesem Falle agiert die Katalysatorkomponente c) gleichzeitig auch als zusätzliches Treibmittel.

Geeignete Aminkatalysatoren können auch funktionelle Gruppen enthalten, die mit Isocyanat reagieren können. Beispiele für einsetzbare einbaubare Katalysatoren sind beispielsweise Bisdimethylaminopropylharnstoff, Bis(N,N-Dimethylaminoethoxyethyl)carbamat, Dimethylaminopropylharnstoff, N,N,N-Trimethyl-N-hydroxyethylbis(aminopropylether), N,N,N-Trimethyl-N-hydroxyethylbis(aminoethylether), Diethylethanolamin, Bis(N,N-dimethyl-3-aminopropyl)amin, Dimethylaminopropylamin, 3 -Di¬methyaminopropyl-N,N-dimethylpropan-1,3-diamin, Dimethyl-2-(2-amino¬ethoxyethanol) und (1,3-Bis(dimethylamino)-propan-2-ol), N,N-Bis-(3-dimethylamino-propyl)-N-isopropanolamin, Bis-(dimethylaminopropyl)-2-hydroxyethylamin, N,N,N-Trimethyl-N-(3 aminopropyl)-bis(amino¬ethylether), 3-Dimethylaminoisopropyldiisopropanolamin oder Mischungen davon.

In einer Ausführungsform werden die Katalysatoren c) in einer Menge von 0 bis 2, bevorzugt von ≥ 0 bis < 2, besonders bevorzugt von ≥ 0 bis < 1,0 Gew.-%, bezogen auf das Gesamtgewicht der Komponente a) und b), eingesetzt. In einer möglichen Ausführungsform wird kein Katalysator c) zugesetzt.

Erfindungsgemäß enthält die Treibmittelkomponente f) mindestens eine Carbonsäure ausgewählt aus Ameisensäure und Essigsäure oder besteht aus Wasser und optional einer oder mehreren Verbindung(en) ausgewählt aus der Gruppe enthaltend Kohlenwasserstoffe, Fluor-Kohlenstoffe und Fluor-Kohlenwasserstoffe.

Als Kohlenwasserstoffe kommen insbesondere Pentan, Butan und/oder Hexan in Betracht, als Fluor-Kohlenwasserstoff insbesondere 1,1,1,3,3-Pentafluorpropan (HFC-245fa).

Zusätzlich zu der mindestens einen Carbonsäure ausgewählt aus Ameisensäure und Essigsäure kommen als chemische Treibmittel Wasser und/oder Phospholinoxid in Frage. Als physikalische Treibmittel können beispielsweise Kohlenwasserstoffe wie Pentan, Butan und/oder Hexan, aber auch halogenierte Kohlenwasserstoffe, insbesondere Fluor-Kohlenstoffe oder Fluor-Kohlenwasserstoffe eingesetzt werden.

In einer bevorzugten Ausführungsform werden Ameisensäure und Fluor-Kohlenstoffe und/oder Fluor-Kohlenwasserstoffe, insbesondere 1,1,1,3,3-Pentafluorpropan (HFC-245fa) als Treibmittel eingesetzt.

In einer besonders bevorzugten Ausführungsform stellt Ameisensäure das alleinige Treibmittel dar.

In einer ebenfalls besonders bevorzugten Ausführungsform besteht das Treibmittel aus einer Mischung aus mindestens 60 Gew.-% Ameisensäure und maximal 40 Gew.-% Wasser, bevorzugt aus mindestens 80 Gew.-% Ameisensäure und maximal 20 Gew.-% Wasser.

Bevorzugte Hilfs- und Zusatzmittel e) sind die bekannten Schaumstoffstabilisatoren vom Typ der Polyethersiloxane, Formtrennmittel, z.B. Polyamidwachse und/oder Stearinsäurederivate und/oder natürliche Wachse, z.B. Carnaubawachs.

Als Hilfs- und Zusatzstoffe (e) können beispielsweise mehrfunktionelle Hydroxyl- oder Aminogruppenhaltige Verbindungen e1) eingesetzt werden, welche e1-i) Verbindungen umfassen, die mindestens 2, insbesondere 2 bis 8 und vorzugsweise 2 bis 3 alkoholische Hydroxylgruppen und ein Molekulargewicht von 62 bis 8000 g/mol aufweisen. Solche Verbindungen sind als Aufbaukomponente für Polyurethan an sich bekannt und umfassen niedermolekulare Kettenverlängerer und Polyole mit zahlenmittleren Molekulargewichten von größer als 200 g/mol. Beispiele für Kettenverlängerer sind einfache mehrwertige Alkohole wie Ethylenglykol, Hexadiol-1,6, Glycerin oder Trimethylolpropan, Beispiele für Polyole sind Dimethylsiloxan-Einheiten aufweisende Polyole, z.B. Bis-(dimethylhydroxymethyl-silyl)ether; Estergruppen aufweisende Polyhydroxylverbindungen wie z.B. Ricinusöl oder Polyhydroxypolyester, wie sie durch Polykondensation überschüssiger Mengen einfacher mehrwertiger Alkohole der soeben beispielhaft genannten Art mit vorzugsweise dibasischen Carbonsäuren bzw. deren Anhydride wie z.B. Adipinsäure, Phthalsäure oder Phthalsäureanhydrid zugänglich sind, Poly-hydroxylpolyether wie sie durch Anlagerung von Alkylenoxiden wie Propylenoxid und/oder Ethylenoxid an geeignete Startermoleküle wie z.B. Wasser, die soeben genannten einfachen Alkohole oder auch Amine mit mindestens zwei aminischen NH-Bindungen zugänglich sind, oder Polycarbonatpolyole, die beispielsweise aus mehrwertigen Alkoholen und Carbonaten oder Phosgen erhalten werden können.

Die Verbindungen e1) können darüber hinaus auch e1-ii) Verbindungen mit mindestens zwei gegenüber Isocyanaten reaktiven Wasserstoffatomen sein, von denen mindestens eines zu einer primären oder sekundären Aminogruppe gehört. Diese umfassen Polyetheramine und Verbindungen mit Molekulargewichten von kleiner 500 g/mol und zwei Aminogruppen. Polyetheramine sind aus der Polyurethanchemie bekannt und können erhalten werden durch endständige Aminierung von Polyetherpolyolen. Diese weisen vorzugsweise Molekulargewichte von 500 bis 8000 g/mol auf. Die vorzugsweise verwendeten Verbindungen mit zwei Aminogruppen und mit Molekulargewichten von kleiner 500 g/mol weisen besonders bevorzugt ein Molekulargewicht von 58 bis 300 g/mol und insbesondere von 100 bis 200 g/mol auf. Dabei weisen diese Verbindungen als gegenüber Isocyanaten reaktive Gruppen vorzugsweise zwei primäre Aminogruppen auf. In einer besonders bevorzugten Ausführungsform sind die primären Aminogruppen an aromatische Kohlenstoffatome, vorzugsweise an einen aromatischen 6-Ring, insbesondere in Metha- oder Paraposition gebunden. Insbesondere wird als Verbindungen e1-ii) Diethylentoluoldiamin (DETDA), insbesondere DETDA 80 eingesetzt. Diethylentoluoldiamin ist kommerziell erhältlich, beispielsweise von der Lonza oder Abemarle.

Werden Verbindungen mit zwei Aminogruppen und mit Molekulargewichten von kleiner 500 g/mol eingesetzt, geschieht dies vorzugsweise in Mengen von 0,1 bis 5, besonders bevorzugt von 0,5 bis 2 Gew.-%, bezogen auf das Gesamtgewicht der Verbindungen (a) und (b).

Die Hilfs- und Zusatzstoffe e1) werden, falls überhaupt, in einer solchen maximalen Menge mitverwendet, die einem NCO/OH-Äquivalentverhältnis, bezogen auf die Isocyanatgruppen der Komponente a) und die Hydroxylgruppen und/oder Aminogruppen der Komponenten e1), von mindestens 2 : 1, vorzugsweise mindestens 7 : 1 und insbesondere mindestens 10 : 1 entspricht. In jedem Fall muss die Menge der Komponente a) so bemessen sein, dass das Äquivalentverhältnis von Isocyanatgruppen der Komponente a) zur Summe der Epoxidgruppen der Komponente b), Hydroxylgruppen und/oder Aminogruppen der Komponente e1) und den gegebenenfalls in der Komponente b) vorliegenden Hydroxylgruppen mindestens bei 1,2 : 1, vorzugsweise 3 : 1 bis 65 : 1, insbesondere 3 : 1 bis 30 : 1, besonders bevorzugt 3 : 1 bis 15 : 1, liegt.

Das Verhältnis des Gewichts aller Hydroxyl- und / oder Aminogruppen - haltigen Verbindungen aus der Komponente e1), vorzugsweise aus den Polyolen und Polyetheraminen, zu dem Gewicht der Epoxidkomponente b) ist bevorzugt kleiner als 30:70, bevorzugt beträgt es höchstens 28:72, besonders bevorzugt höchstens 25:75 und ganz besonders bevorzugt 0 bis 20 : 80 bis 100.

Der erfindungsgemäße EPIC-Schaum enthält Urethangruppen und/oder Harnstoffgruppen stammend aus der Reaktion des Polyisocyanats a) mit der Komponente e) vorzugsweise in einem kleinen Gewichtsanteil. Der Gehalt an Urethangruppen und/oder Harnstoffgruppen resultierend aus der Reaktion des Polyisocyanats a) mit den Hydroxyl- und/oder Aminogruppen aus der Komponente e) liegt vorzugsweise unter 6 Gew.-%, bevorzugt unter 5 Gew.-%, besonders bevorzugt unter 4 Gew.-%, und ganz besonders bevorzugt unter 3 Gew.-%, bezogen auf das Gesamtgewicht der Komponenten.

In einer besonders bevorzugten Ausführungsform enthält der EPIC-Schaum einen Gehalt an Urethangruppen und/oder Harnstoffgruppen resultierend aus der Reaktion des Polyisocyanats a) mit den Hydroxyl- und/oder Aminogruppen aus der Komponente e), der ≥ 0,01 bis ≤ 1 Gew.% beträgt, bevorzugt ≥ 0,01 bis < 0,8 Gew.%, bezogen auf das Gesamtgewicht der Komponenten.

In einer Ausführungsform enthält der EPIC-Schaum keine Urethangruppen und / oder Harnstoffgruppen, die aus der Reaktion des Polyisocyanats a) mit der Komponente e) resultieren.

Bevorzugt enthält die Reaktionsmischung weniger als 28 Gew.-%, bevorzugt weniger als 25 Gew-% an Hydroxylgruppen- und/oder Aminogruppen-haltigen Verbindungen der Komponente e1), bezogen auf das Gesamtgewicht der Komponenten b) und e1), und der EPIC-Schaum enthält weniger als 6 Gew.-%, bevorzugt weniger als 5 Gew.-%, ganz besonders bevorzugt ≥ 0,01 bis ≤ 1 Gew.% und insbesondere bevorzugt ≥ 0,01 bis < 0,8 Gew.%, bezogen auf das Gesamtgewicht der Komponenten an Urethan- und/oder Harnstoffgruppen stammend aus der Reaktion des Polyisocyanats a) mit der Komponente e), bezogen auf das Gesamtgewicht des Schaums.

Besonders bevorzugt enthält die Reaktionsmischung weniger als 28 Gew.-%, bevorzugt weniger als 25 Gew-% an Polyolen und / oder Polyetheraminen, bezogen auf das Gesamtgewicht der Komponenten b) und der Polyole und / oder Polyetheramine, und der EPIC-Schaum enthält weniger als 6 Gew.-%, bevorzugt weniger als 5 Gew.-%, ganz besonders bevorzugt ≥ 0,01 bis ≤ 1 Gew.% und insbesondere bevorzugt ≥ 0,01 bis < 0,8 Gew.%, bezogen auf das Gesamtgewicht der Komponenten an Urethan- und/oder Harnstoffgruppen stammend aus der Reaktion des Polyisocyanats a) mit der Komponente e), bezogen auf das Gesamtgewicht des Schaums.

Weitere, gegebenenfalls mitzuverwendende Hilfs- und Zusatzmittel e) sind e2) polymerisierbare, olefinisch ungesättigte Monomere, die in Mengen von bis zu 100 Gew.-%, vorzugsweise bis zu 50 Gew.-%, insbesondere bis zu 30 Gew.-%, bezogen auf das Gesamtgewicht der Komponenten a) und b) zum Einsatz gelangen können.

Typische Beispiele von Zusatzmitteln e2) sind olefinisch ungesättigte Monomere, die keine gegenüber NCO-Gruppen reaktive Wasserstoffatome aufweisen, wie z.B. Diisobutylen, Styrol, C₁-C₄-Alkylstyrole, wie α-Methylstyrol, α-Butylstyrol, Vinylchlorid, Vinylacetat, Maleinimidderivate wie z.B. Bis-(4-maleinimido-phenyl)-methan, Acrylsäure-C₁-C₈-alkylester wie Acrylsäuremethylester, Acrylsäurebutylester oder Acrylsäureoctylester, die entsprechenden Methacrylsäureester, Acrylnitril oder Diallylphthalat. Beliebige Gemische derartiger olefinisch ungesättigter Monomerer können ebenfalls eingesetzt werden. Vorzugsweise werden Styrol und/oder (Meth)-acrylsäure-C₁-C₄-alkylester verwendet, vorausgesetzt, die Zusatzmittel e2) werden überhaupt eingesetzt.

Bei Mitverwendung von Zusatzmitteln e2) ist die Mitverwendung von klassischen Polymerisationsinitiatoren wie z.B. Benzoylperoxid möglich, im Allgemeinen jedoch nicht erforderlich.

Die Mitverwendung von Hilfs- und Zusatzmitteln e1) bzw. e2) ist im Allgemeinen nicht erforderlich. Die unter e1) beispielhaft genannten Zusatzmittel sind im Übrigen gegenüber den unter e2) beispielhaft genannten Verbindungen bevorzugt. Grundsätzlich ist es auch möglich, gleichzeitig beide Arten von Hilfs- und Zusatzmitteln mitzuverwenden. Zur Optimierung der mechanischen Daten der EPIC-Schäume kann jedoch die Zugabe eines kleinen Anteil an Hilfs- und Zusatzmitteln e2) bzw. e3) vorteilhaft sein, wobei ein zu großer Anteil wiederum einen negativen Einfluss ausüben kann.

Die weiteren Hilfs- und Zusatzstoffe e) werden in bevorzugter Weise nur in einer solchen maximalen Menge mitverwendet, dass das NCO/OH-Äquivalentverhältnis, bezogen auf die Isocyanatgruppen der Komponente a) und die Hydroxylgruppen und/oder Aminogruppen der Komponente e) 2 : 1, vorzugsweise mindestens 7 : 1 und insbesondere bevorzugt mindestens 10 : 1 beträgt.

Weitere gegebenenfalls mitzuverwendende Hilfs- und Zusatzmittel e) sind beispielsweise e3) Füllstoffe wie z.B. Quarzmehl, Kreide, Microdol, Aluminiumoxid, Siliciumcarbid, Graphit oder Korund; Pigmente wie z.B. Titandioxid, Eisenoxid oder organische Pigmente wie Phthalocyanin-Pigmente; Weichmacher wie z.B. Dioctylphthalat, Tributyl- oder Triphenylphosphat; einbaufähige Verträglichkeitsvermittler wie Methacrylsäure, β-Hydroxypropylester, Maleinsäure- und Fumarsäureester; Flammschutz verbessernde Substanzen wie roter Phosphor oder Magnesiumoxid; lösliche Farbstoffe oder Verstärkungsmaterialien wie z.B. Glasfasern oder Glasgewebe. Ebenfalls geeignet sind C-Fasern bzw. C-Fasergewebe und andere organische Polymerfasern wie z.B. Aramidfasern oder LC-Polymerfasern (LC = "Liquid Crystal"). Weiterhin kommen als Füllstoffe metallische Füllstoffe in Betracht, wie Aluminium, Kupfer, Eisen und/oder Stahl. Die metallischen Füllstoffe werden insbesondere in körniger Form und/oder Pulverform eingesetzt.

Weitere gegebenenfalls mitzuverwendende Hilfs- und Zusatzmittel e) sind beispielsweise e4) olefinisch ungesättigte Monomere mit gegenüber NCO-Gruppen reaktiven Wasserstoffatomen wie z.B. Hydroxyethyl-methacrylat, Hydroxypropyl-methacrylat und Aminoethylmethacrylat.

Die Hilfs- und Zusatzmittel e) können sowohl den Ausgangsmaterialien a) und b) vor der Durchführung des erfindungsgemäßen Verfahrens einverleibt als auch erst später zugemischt werden.

Zur Durchführung des erfindungsgemäßen Verfahrens können die Ausgangsmaterialien a) und b) miteinander vermischt werden. Dem Reaktionsgemisch werden dann gegebenenfalls weitere Hilfs- und Zusatzmittel e), der Katalysator c), die mindestens eine Carbonsäure ausgewählt aus Ameisensäure und Essigsäure und/oder das Wasser und gegebenenfalls die weiteren Treibmittel f) zugesetzt, das Ganze innig vermischt und das schaumfähige Gemisch in eine offene oder geschlossene Form eingegossen.

Bei Verwendung eines aus der Polyurethan-Verarbeitung bekannten Mehrkomponenten-Mischkopfes zeichnet sich das Verfahren durch eine hohe Flexibilität aus. Durch Variation des Mischungsverhältnisses der Komponenten a) und b) können mit ein und denselben Ausgangsmaterialien verschiedene Schaumstoff-Qualitäten hergestellt werden. Zusätzlich können auch verschiedene Komponenten a) und verschiedene Komponenten b) in unterschiedlichen Verhältnissen direkt in den Mischkopf gefahren werden. Die Hilfs- und Zusatzmittel e), der Katalysator c), mindestens eine Carbonsäure ausgewählt aus Ameisensäure und Essigsäure und/oder das Wasser und gegebenenfalls weitere Treibmittel f) können separat oder als Batch in den Mischkopf gefahren werden. Möglich ist auch eine Dosierung der Hilfs- und Zusatzmittel e) zusammen mit dem Katalysator c) und eine separate Dosierung der Treibmittel f). Durch Variation der Menge an Treibmittel können Schäume mit verschiedenen Rohdichte-Bereichen hergestellt werden.

Es ist bevorzugt, dass die Vermischung der Komponenten einstufig erfolgt (sogenanntes "one-shot" Verfahren). In jedem Fall soll die Umsetzung ohne den Schritt der Vortrimerisierung durchgeführt werden. Das Herstellverfahren kann kontinuierlich oder diskontinuierlich erfolgen.

Je nach eingesetzten Komponenten beginnt der Treibvorgang im Allgemeinen nach einer Liegezeit von 5 s bis 6 min und ist in der Regel nach 2-15 min beendet. Die Schäume sind feinzellig und gleichmäßig. In einer Ausführungsform besitzen sie Schaumdichten von 25-80 kg/m³.

Zwecks Erreichens optimaler Eigenschaften ist es vorteilhaft, nach dem Aufschäumen in den endgültigen geschäumten Zustand eine nachträgliche Temperaturbehandlung ("Tempern") durchzuführen.

In einer Ausführungsform wird nach dem Aufschäumen in den endgültigen geschäumten Zustand eine nachträgliche Temperaturbehandlung zwischen 70 und 250°C, bevorzugt 120 und 250°C, besonders bevorzugt 180 und 220°C vorgenommen.

In einer anderen, auch bevorzugten Ausführungsform werden die Schaumstoffe nicht getempert.

Bei Verwendung einer geschlossenen Form zur Herstellung der erfindungsgemäßen Schaumstoffe (Formverschäumung) kann es zwecks Erreichens optimaler Eigenschaften vorteilhaft sein, die Form zu überfüllen. Überfüllen bedeutet, eine Menge an schaumfähigem Gemisch einzufüllen, die in einer offenen Form nach dem kompletten Aufschäumen ein größeres Volumen einnehmen würde als das innere Volumen der Form ausmacht.

Die Erfindung schließt solche Ausführungsformen ein, welche sich durch Kombination der in der Beschreibung genannten Ausführungsformen, insbesondere der als bevorzugt und besonders bevorzugte genannten Ausführungsformen, ergibt.

In einer beispielhaften Ausführungsform des erfindungsgemäßen Verfahrens werden
a) ein Polyisocyanatgemisch enthaltend mehr als 60 Gew.- Polyphenyl-polymethylen-polyisocyanate mit f > 2 und der Strukturformel C₁₅H₁₀N₂O₂ [C₈H₅NO]ₙ wobei n= ganze Zahl > 0, und
b) ein Polyglycidylether von mehrwertigen Phenolen, ausgewählt aus der Gruppe enthaltend die Polyglycidylether von Bisphenol A, Bisphenol F oder von Novolak,
   in einer solchen Menge, die einem Äquivalentverhältnis von Isocyanatgruppen zu Epoxidgruppen von 3 : 1 bis 15 : 1 entspricht,
c) einem die Isocyanat/Epoxid-Reaktion beschleunigenden Katalysator, welcher ausgewählt ist aus der Gruppe enthaltend Dimethylbenzylamin, Methyldibenzylamin, Bortrichlorid-tert.-Amin-Addukte sowie N-[3-(Dimethylamino)propyl]formamid,
e) gegebenenfalls in Gegenwart von weiteren Hilfs- und Zusatzstoffen, welche jedoch nur in einer solchen maximalen Menge mitverwendet werden, dass das NCO/OH-Äquivalentverhältnis, bezogen auf die Isocyanatgruppen der Komponente a) und die Hydroxylgruppen und/oder Aminogruppen der Komponente e) mehr als 7 : 1 beträgt,
f) Ameisensäure oder Ameisensäure und Kohlenwasserstoffe als Treibmittel
in Abwesenheit einer als Stopper wirkenden Komponente in einem one-shot Verfahren zu einem EPIC-Schaum miteinander umgesetzt.

Die Verwendung von einem Polyglycidylether von Bisphenol F in dieser Ausführungsform ist besonders bevorzugt.

In einer weiteren beispielhaften Ausführungsform des erfindungsgemäßen Verfahrens werden
a) ein Polyisocyanatgemisch enthaltend mehr als 60 Gew.- Polyphenyl-polymethylen-polyisocyanate mit f > 2 und der Strukturformel C₁₅H₁₀N₂O₂ [C₈H₅NO]ₙ wobei n= ganze Zahl > 0, und
b) ein Polyglycidylether von mehrwertigen Phenolen, ausgewählt aus der Gruppe enthaltend die Polyglycidylether von Bisphenol A, Bisphenol F oder von Novolak,
   in einer solchen Menge, die einem Äquivalentverhältnis von Isocyanatgruppen zu Epoxidgruppen von 3 : 1 bis 15 : 1 entspricht,
c) einem die Isocyanat/Epoxid-Reaktion beschleunigenden Katalysator, welcher ausgewählt ist aus der Gruppe enthaltend Dimethylbenzylamin, Methyldibenzylamin, Bortrichlorid-tert.-Amin-Addukte sowie N-[3-(Dimethylamino)propyl]formamid,
e) gegebenenfalls in Gegenwart von weiteren Hilfs- und Zusatzstoffen, welche jedoch nur in einer solchen maximalen Menge mitverwendet werden, dass das NCO/OH-Äquivalentverhältnis, bezogen auf die Isocyanatgruppen der Komponente a) und die Hydroxylgruppen und/oder Aminogruppen der Komponente e) mehr als 7 : 1 beträgt,
f) Ameisensäure oder Ameisensäure und Kohlenwasserstoffe als Treibmittel
in Abwesenheit einer als Stopper wirkenden Komponente in einem one-shot Verfahren zu einem EPIC-Schaum miteinander umgesetzt und der entstandene Schaumstoff anschließend getempert.

In weiteren erfindungsgemäßen Ausführungsformen werden die beiden oben beschriebenen beispielhaften Ausführungsformen mit Wasser als Treibmittel durchgeführt.

In weiteren erfindungsgemäßen Ausführungsformen werden die beiden oben beschriebenen beispielhaften Ausführungsformen mit Wasser und Ameisensäure als Treibmittel durchgeführt.

In weiteren erfindungsgemäßen Ausführungsformen werden die oben beschriebenen beispielhaften Ausführungsformen in Abwesenheit eines Flammschutzmittels durchgeführt.

In weiteren erfindungsgemäßen Ausführungsformen werden die beiden oben beschriebenen beispielhaften Ausführungsformen mit Essigsäure als Treibmittel durchgeführt.

In weiteren bevorzugten erfindungsgemäßen Ausführungsformen werden die beiden oben beschriebenen Ausführungsformen so durchgeführt, dass der resultierende Schaumstoff < 6 Gew.-%, und insbesondere bevorzugt < 0,8 Gew.-% Urethangruppen und/oder Harnstoffgruppen, bezogen auf das Gesamtgewicht der Komponenten, stammend aus der Reaktion des Polyisocyanats a) mit e1) mehrfunktionellen Hydroxylgruppen- und/oder Aminogruppen-haltigen Verbindungen enthält.

Die erfindungsgemäßen Schaumstoffe besitzen eine geringe Wärmeleitfähigkeit, sind sehr gute mechanische Eigenschaften, wie eine hohe Druckfestigkeit, und einen hohen Druck-E-Modul. Weiter sind die erfindungsgemäßen Schaumstoffe schwer entflammbar und entwickeln beim Verbrennen nur wenig Hitze und Rauch. Sie besitzen niedrige dielektrische Verluste, die Feuchtebeständigkeit und Abriebfestigkeit sowie die Verarbeitbarkeit in Formen sind hervorragend. Daher eignen sich die erfindungsgemäßen Schaumstoffe hervorragend als Füllschaum für Hohlräume, als Füllschaum zur Elektroisolierung, als Kern von Sandwich-Konstruktionen, zur Herstellung von Konstruktionsmaterialien für Innen- und Außenanwendungen jeglicher Art, zur Herstellung von Konstruktionsmaterialien für den Fahrzeug-, Schiff-, Flugzeug- und Raketenbau, zur Herstellung von Flugzeuginnen- und -außenbauteilen, zur Herstellung von Dämmmate-rialien jeglicher Art, zur Herstellung von Dämmplatten, Rohr- und Behälterisolierungen, zur Herstellung von schallabsorbierenden Materialien, zum Einsatz in Motorräumen, zur Herstellung von Schleifscheiben und zur Herstellung von Hochtemperaturisolierungen und schwer entflammbaren Isolierungen.

Die Erfindung soll anhand der nachfolgenden Beispiele näher erläutert werden.

### Beispiele

In den nachfolgenden Beispielen beziehen sich alle Prozente auf Gewichtsprozente.

Die Messung der Rohdichten erfolgte gemäß DIN 53 420 an Schaumwürfeln (5 x 5 x 5 cm), die aus der Mitte der Schäume geschnitten wurden.

Die Messung der Druckfestigkeiten erfolgte gemäß DIN EN 826 an Schaumwürfeln (5 x 5 x 5 cm), die aus der Mitte der Schäume geschnitten wurden.

Die Messung der maximalen mittleren Wärmefreisetzungsrate (MARHE) erfolgte gemäß ISO 5660-1. Die Messung der Gesamten Rauchentwicklung per beanspruchte Oberfläche (TSP) erfolgte gemäß ISO 5660-2. Alle Prüfungen wurden mit einer Strahlungswärmestromdichte von 50 kW/m2 an Probenkörpern mit Abmessungen von 100 mm × 100 mm × 20 mm durchgeführt.

Entzündbarkeit und Flammenausbreitung wurden gemäß den Anforderungen an die Baustoffklasse B2 gemäß DIN4102-1 ermittelt.

### Isocyanat:

MDI-1: Desmodur 44 V 70 L, Mischung aus ca. 35 Gew.-% monomerem MDI und 65 Gew.-% polymerem MDI, f = 3,19, Isocyanatgehalt 30,5 bis 32%, Viskosität bei 20°C 1100 mPas gemäß DIN 53 019; Handelsprodukt der Bayer MaterialScience AG, Leverkusen/Deutschland
MDI-2: Mischung aus ca. 30 Gew.-% monomerem MDI und 70 Gew.-% polymeren MDI, Funktionalität von ca. 2,8, Isocyanatgehalt von 31,5 g /100 g gemäß ASTM D 5199-96 A, Viskosität bei 25°C von 550 mPas gemäß DIN 53 018

### Epoxid:

BADGE1: Ruetapox 0162, Diglycidylether von Bisphenol A, Handelsprodukt von Bakelite AG; Duisburg/Deutschland, Epoxidindex: 5,8 - 6,1 eq/kg und einem Epoxy-äquivalent von 167-171 g/eq, Viskosität bei 25 °C 4000-5000 mPas
BADGE2: Araldite GY250, Diglycidylether von Bisphenol A, Handelsprodukt von Huntsman, Basel/ Schweiz, Epoxidindex: 5,3 - 5,45 eq/kg und einem Epoxy-äquivalent von 182-192 g/eq, Viskosität bei 25 °C 10000-12000 mPas gemäß DIN/ISO 9371 B
BADGE3: Leuna Epilox® A 18-00, Diglycidylether von Bisphenol A, Handelsprodukt von LEUNA-Harze GmbH, Leuna/Deutschland, Epoxy-äquivalent von 175-185 g/eq gemäß DIN 16 945, Viskosität bei 25 °C 8000 - 10000 mPas gemäß DIN 53 015
BFDGE: Araldite GY281, Diglycidylether von Bisphenol F, Handelsprodukt von Huntsman, Basel/Schweiz, Epoxidindex: 5,8 - 6,3 eq/kg und einem Epoxy-äquivalent von 158-172 g/eq, Viskosität bei 25°C 5000-7000 mPas
EPN: Araldit GY289, Epoxyphenol des Novolaks, Handelsprodukt von Huntsman, Basel/Schweiz, Epoxidindex: 5,7 - 6,0 eq/kg und einem Epoxy-äquivalent von 167-175 g/eq, Viskosität bei 25 °C 7000-11000 mPas

### Weitere Komponenten:

POLYOL-1: Desmophen 3600Z, Polyetherpolyol, OH-Zahl 56 mg KOH/g, f = 2, hergestellt durch Propoxylierung von 1,2-Propylenglykol: Handelsprodukt der Bayer MaterialScience AG, Leverkusen/ Deutschland
Tegostab B 8411: Polyetherpolysiloxan, Handelsprodukt von Evonik, Essen/ Deutschland Tegostab B 8485: Polyetherpolysiloxan, Handelsprodukt von Evonik, Essen/ Deutschland Accelerator DY 9577: Bortrichlorid-Amin-Komplex, thermolatenter Katalysator, Handelsprodukt von Huntsman, Bad Säckingen, Deutschland
Addocat 3144: N-[3-(Dimethylamino)propyl]formamid, Handelsprodukt von Rheinchemie, Mannheim/ Deutschland
AS: Ameisensäure (98 - 100%), CAS Nr. 64-18-6, erhältlich von KMF Laborchemie, Lohmar/ Deutschland

### Amasil 85 %, 85 Gew.-% Ameisensäure in Wasser

Disflamol DPK: Diphenylkresylphosphat, Handelsprodukt von Lanxess, Köln/ Deutschland Solkane 365/227: flüssiger Hydrofluorkohlenstoff als Treibmittel für Schäume, erhältlich von Solvay Fluor GmbH, Hannover, Deutschland
N,N-Dimethylbenzylamin, 98% CAS Nr. 103-83-3, erhältlich von Sigma-Aldrich/ Deutschland
N,N-Methyldibenzylamin, CAS Nr 102-05-06, erhältlich van Sigma-Aldrich/ Deutschland
DETDA 80, Diethyltoluyenediamin, CAS Nr. 68479-98-1, erhältlich von Lonza, Basel/ Schweiz
DABCO T: (2-(2-Dimethylamino)ethyl)methylamino)ethanol), Handelsprodukt der Air Products and Chemicals, Inc p-Toluolsulfonsäuremethylester: CAS Nr. 80-48-8, erhältlich von Merck KGaA Darmstadt/ Deutschland
Exolit RP6520: Thixotrope, roten Phosphor enthaltene Dispersion. Flammschutzmittel der Fa. Clariant SE / Deutschland
Additivmischung 1 (AM-1): Mischung aus POLYOL-1, Tegostab B 8411, N-[3-(Dimethylamino)propyl]formamid, wie verwendet in den Beispielen 1 bis 11
Additivmischung 2 (AM-2): Mischung aus Tegostab B 8485, Diethyltoluyendiamin, Accelerator DY 9577, N,N-Dimethylbenzylamin und N,N-Methyldibenzylamin, wie verwendet in den Beispielen 12 und 13

### Beispiel 1

320 g MDI-1 wurden mit 80 g BADGE versetzt und mittels eines Schnellrührers für 2 Minuten mit Luft beladen. Unter weiterem Rühren wurden 15,0 g POLYOL-1, 6,0 g Tegostab B 8411 und 3,0 g N-[3-(Dimethylamino)propyl]formamid zugegeben. Direkt im Anschluss daran wurden 6,0 g Ameisensäure (98 - 100%) zugegeben und die Reaktionsmischung für weitere 10 s innig vermischt. Die Reaktionsmischung wurde in einen 20 cm x20 cm x 24 cm Pappkarton gegossen und man ließ die Reaktionsmischung in dem Pappkarton aufschäumen. Der Schaum wurde für 3 h bei 200°C getempert.
Rohdichte: 40 kg/m³

### Beispiel 2

320 g MDI-1 wurden mit 80 g BFDGE versetzt und mittels eines Schnellrührers für 2 Minuten mit Luft beladen. Unter weiterem Rühren wurden 15,0 g POLYOL-1, 6,0 g Tegostab B 8411 und 3,0 g N-[3-(Dimethylamino)propyl]formamid zugegeben. Direkt im Anschluß daran wurden 6,0 g Ameisensäure (98 - 100%) zugegeben und die Reaktionsmischung für weitere 10 s innig vermischt. Die Reaktionsmischung wurde in einen 20 cm x 20 cm x24 cm Pappkarton gegossen und man ließ die Reaktionsmischung in dem Pappkarton aufschäumen. Der Schaum wurde für 3 h bei 200°C getempert.
Rohdichte: 42 kg/m³

### Beispiel 3

320 g MDI-1 wurden mit 80 g BADGE und 93,6 g Disflamoll DPK versetzt und mittels eines Schnellrührers für 2 Minuten mit Luft beladen. Unter weiterem Rühren wurden 15,0 g POLYOL-1, 6,0 g Tegostab B 8411und 3,0 g N-[3-(Dimethylamino)propyl]formamid zugegeben. Direkt im Anschluß daran wurden 10 g Ameisensäure (98 - 100%) zugegeben und die Reaktionsmischung für weitere 10 s innig vermischt Die Reaktionsmischung wurde in einen 20 cm x 20 cm x 24 cm Pappkarton gegossen und man ließ die Reaktionsmischung in dem Pappkarton aufschäumen.
Rohdichte: 42 kg/m³

### Beispiel 4

320 g MDI-1 wurden mit 80 g BADGE und 93,6 g Disflamoll DPK versetzt und mittels eines Schnellrührers für 2 Minuten mit Luft beladen. Unter weiterem Rühren wurden 15,0 g POLYOL-1, 6,0 g Tegostab B 8411, und 3,0 g N-[3-(Dimethylamino)propyl]formamid zugegeben. Direkt im Anschluss daran wurden 8,8 g Ameisensäure (98 - 100%) zugegeben und die Reaktionsmischung für weitere 10 s innig vermischt. Die Reaktionsmischung wurde in einen 20 cm x 20 cm x 24 cm Pappkarton gegossen und man ließ die Reaktionsmischung in dem Pappkarton aufschäumen. Der Schaum wurde für 3 h bei 200°C getempert.
Rohdichte: 42 kg/m³

### Beispiel 5

320 g MDI-1 wurden mit 80 g BADGE versetzt und mittels eines Schnellrührers für 2 Minuten mit Luft beladen. Unter weiterem Rühren wurden 15,0 g POLYOL-1, 6,0 g Tegostab B 8411und 3,0 g N-[3-(Dimethylamino)propyl]formamid zugegeben. Direkt im Anschluss daran wurden 6,0 g Ameisensäure (98 - 100%) zugegeben und die Reaktionsmischung für weitere 10 s innig vermischt. Die Reaktionsmischung wurde in einen 20 cm x 20 cm x 24 cm Pappkarton gegossen und man ließ die Reaktionsmischung in dem Pappkarton aufschäumen. Man ließ die Reaktionsmischung im Pappbecher aufschäumen.
Rohdichte: 43 kg/m³

### Beispiel 6

320 g MDI-1 wurden mit 80 g BADGE versetzt und mittels eines Schnellrührers für 2 Minuten mit Luft beladen. Die Reaktionsmischung wird im Kühlschrank auf 10 °C heruntergekühlt. Unter Rühren wurden 15,0 g POLYOL-1, 6,0 g Tegostab B 8411 und 3,0 g N-[3-(Dimethylamino)propyl]formamid zugegeben. Direkt im Anschluss daran wurden 6,0 g Ameisensäure (98-100%) und 19,6 g Solkane 365/227 87/13 zugegeben und die Reaktionsmischung für weitere 10 s innig vermischt. Die Reaktionsmischung wurde in einen 20x20x24 cm Pappkarton gegossen und man ließ die Reaktionsmischung in dem Pappkarton aufschäumen. Der Schaum wurde für 3 h bei 200°C getempert.
Rohdichte: 35 kg/m³

### Beispiel 7

320 g MDI-1 wurden mit 80 g BADGE versetzt und mittels eines Schnellrührers für 2 Minuten mit Luft beladen. Die Reaktionsmischung wird im Kühlschrank auf 10 °C heruntergekühlt. Unter Rühren wurden 15,0 g POLYOL-1, 6,0 g Tegostab B 8411 und 3,0 g N-[3-(Dimethylamino)propyl]formamid zugegeben. Direkt im Anschluß daran wurden 6,0 g Ameisensäure (98-100%) und 18,0 g HFC-245fa zugegeben und die Reaktionsmischung für weitere 10 s innig vermischt. Die Reaktionsmischung wurde in einen 20 cm x 20 cm x 24 cm Pappkarton gegossen und man ließ die Reaktionsmischung in dem Pappkarton aufschäumen. Man ließ die Reaktionsmischung im Pappbecher aufschäumen. Der Schaum wurde für 3 h bei 200°C getempert.
Rohdichte: 35 kg/m³

### Beispiel 8* (Vergleich, EPIC- Reaktionsharz- Herstellung, Vortrimerisierung zum Intermediat)

800 g eines Gemisches aus 60% 2,4'-Diisocyanatodiphenylmethan und 40% 4,4'-Diisocyanatodiphenylmethan (NCO-Gehalt = 33,6%) wurden bei 50°C mit 200 g BADGE1 und 0,1 ml N,N-Dimethylbenzylamin gemischt und anschließend auf 120°C aufgeheizt. Die leicht exotherme Reaktion zeigte den sofortigen Beginn der Isocyanuratbildung an. Nach 2 Std. Reaktionszeit ohne externe Heizung wurde der Ansatz gekühlt. Dadurch stellte sich eine Innentemperatur von ca. 90°C ein. Dem Ansatz wurde eine Probe entnommen. Die Probe besitzt einen NCO-Gehalt von 23%. Durch Zugabe von 4,28 g p-Toluolsulfonsäuremethylester wurde die Reaktion abgebrochen. Anschließend rührte man den Ansatz weitere 30 min bei 120°C. Es entstand ein bei 20°C flüssiges, klares, gelbes lagerstabiles Harz mit einer Viskosität bei 25°C von 2080 mPas und einem NCO-Gehalt von 21,4% (B-Zustand).

### Beispiel 9a*(Vergleich mit Tempern)

400 g des Harzes aus Beispiel 8 mittels eines Schnellrührers für 2 Minuten mit Luft beladen. Unter Rühren wurden 17,6 g POLYOL-1, 7,0 g Tegostab B 8411 und 3,5 g N-[3-(Dimethylamino)propyl]formamid zugegeben. Direkt im Anschluß daran wurden 6,0 g Ameisensäure (98 - 100%) zugegeben und die Reaktionsmischung für weitere 10 s innig vermischt. Die Reaktionsmischung wurde in einen 20 cm x 20 cm x 24 cm Pappkarton gegossen und man ließ die Reaktionsmischung in dem Pappkarton aufschäumen. Der Schaum wurde für 3 h bei 200°C getempert.
Rohdichte: 39 kg/m³

### Beispiel 9b*(Vergleich ohne Tempern)

400 g des Harzes aus Beispiel 8 wurden mittels eines Schnellrührers für 2 Minuten mit Luft beladen. Unter Rühren wurden17,6 g POLYOL-1, 7,0 g Tegostab B 8411 und 3,5 g N-[3-(Dimethylamino)propyl]formamid zugegeben. Direkt im Anschluß daran wurden 6,0 g Ameisensäure (98 - 100%) zugegeben und die Reaktionsmischung für weitere 10 s innig vermischt. Die Reaktionsmischung wurde in einen 20x20x24 cm Pappkarton gegossen und man ließ die Reaktionsmischung in dem Pappkarton aufschäumen.
Rohdichte: 39 kg/m³

### Beispiel 10

320 g MDI-1 wurden mit 80 g BFDGE versetzt und mittels eines Schnellrührers für 2 Minuten mit Luft beladen. Unter weiterem Rühren wurden 15,0 g POLYOL-1, 6,0 g Tegostab B 8411, 3,0 g N-[3-(Dimethylamino)propyl]formamid und 4 g Exolit RP6520 zugegeben. Direkt im Anschluss daran wurden 6,0 g Ameisensäure (98 - 100%) zugegeben und die Reaktionsmischung für weitere 10 s innig vermischt. Die Reaktionsmischung wurde in einen 20 cm x 20 cm x 24 cm Pappkarton gegossen und man ließ die Reaktionsmischung in dem Pappkarton aufschäumen.
Rohdichte: 42 kg/m³

### Beispiel 11

320 g MDI-1wurden mit 80 g EPN versetzt und mittels eines Schnellrührers für 2 Minuten mit Luft beladen. Unter weiterem Rühren wurden 15,0 g POLYOL-1, 6,0 g Tegostab B 8411, 3,0 g N-[3-(Dimethylamino)propyl]formamid zugegeben. Direkt im Anschluss daran wurden 6,0 g Ameisensäure (98 - 100%) zugegeben und die Reaktionsmischung für weitere 10 s innig vermischt. Die Reaktionsmischung wurde in einen 20 cm x 20 cm x 24 cm Pappkarton gegossen und man ließ die Reaktionsmischung in dem Pappkarton aufschäumen.
Rohdichte: 42 kg/m³

### Beispiel 12

320 g Desmodur 44 V 70L wurden mit 80 g BADGE versetzt und mittels eines Schnellrührers für 2 Minuten mit Luft beladen. Unter weiterem Rühren wurden 6,3 g Tegostab B 8485, 4,4 g Diethyltoluyendiamin, 3,3 g Accelerator DY 9577, 2,4 g N,N-Dimethylbenzylamin und 1,6 g N,N-Methyldibenzylamin zugegeben. Direkt im Anschluss daran wurden 6,0 g Ameisensäure (98 - 100%) zugegeben und die Reaktionsmischung für weitere 10 s innig vermischt. Die Reaktionsmischung wurde in einen 20x20x24 cm Pappkarton gegossen und man ließ die Reaktionsmischung in dem Pappkarton aufschäumen.
Rohdichte: 40 kg/m³

### Beispiel 13

320 g MDI-1 wurden mit 80 g BADGE versetzt und mittels eines Schnellrührers für 2 Minuten mit Luft beladen. Unter weiterem Rühren wurden 6,3 g Tegostab B 8485, 4,4 g Diethyltoluyendiamin, 3,3 g Accelerator DY 9577, 2,4 g N,N-Dimethylbenzylamin, 1,6 g N,N-Methyldibenzylamin und 16,0 g Exolit RP6520 zugegeben. Direkt im Anschluss daran wurden 6,0 g Ameisensäure (98 - 100%) zugegeben und die Reaktionsmischung für weitere 10 s innig vermischt. Die Reaktionsmischung wurde in einen 20 cm x 20 cm x 24 cm Pappkarton gegossen und man ließ die Reaktionsmischung in dem Pappkarton aufschäumen. Der Schaum wurde für 3 h bei 200°C getempert.
Rohdichte: 42 kg/m³

### Beispiel 14

340,75 g MDI-2 und 113,1 g w/w BADGE3 wurden mittels eines Schnellrührers für 20s bis 30s bei 1000 U/min vermengt. 6,8 g 1,36 w/w Wasser wurden zugegeben und für 10 s bei 1000 U/min vermengt. Direkt im Anschluss wurde das Additivpaket bestehend aus 12,35 g Tegostab B 8485, 8,6 g Diethyltoluyendiamin, 6,5 g Accelerator DY 9577, 4,7 g N,N-Dimethylbenzylamin und 3,1 g N,N-Methyldibenzylamin (entsprechend AM-2) sowie 0,81 g Dabco T zugegeben und bei 2000 U /min bei 3 s vermengt. Die Reaktionsmischung ließ man anschließend aufschäumen.
Rohdichte: 28,1 kg/m³

### Beispiel 15

340,75 g w/w MDI-2 und 112,5 w/w BADGE3 wurden mittels eines Schnellrührers für 20s bis 30s bei 1000 U/min vermengt. Amasil 85% wurden zugegeben und für 10 s bei 1000 U/min vermengt. Direkt im Anschluss wurde das Additivpaket bestehend aus 12,3 g Tegostab B 8485, 7,4 g Diethyltoluyendiamin, 5,6 g Accelerator DY 9577, 4,1 gN,N-Dimethylbenzylamin und 2,7 g N,N-Methyldibenzylamin (entsprechend AM-2) sowie 0,81 g Dabco T zugegeben und bei 2000 U /min bei 3 s vermengt. Die Reaktionsmischung ließ man anschließend aufschäumen.
Rohdichte: 36,4 kg/m³

**Tabelle 1:**

| | **1** | **2** | **3** | **4** | **5** | **10** | **11** | **6** | **7** | **9a*** | **9b*** |
|---|---|---|---|---|---|---|---|---|---|---|---|
| **Epoxy-Komponente** | BADGE2 | BFDGE | BADGE2 | BADGE2 | BADGE2 | BFDGE | EPN | BADGE2 | BADGE2 | BADGE1 | BADGE 1 |
| **Treibmittel** | AS | AS | AS | AS | AS | AS | AS | Solkane 365/227 und AS | HFC-245fa und AS | AS | AS |
| **Flammschutzmittel** | - | - | DPK | DPK | - | Exolit RP6520 | - | - | - | - | - |
| **Additivmischung** | AM-1 | AM-1 | AM-1 | AM-1 | AM-1 | AM-1 | AM-1 | AM-1 | AM-1 | AM-1 | AM-1 |
| **Tempern für 3 Std. bei 200 °C (ja/nein)** | ja | ja | nein | ja | nein | ja | ja | ja | ja | ja | nein |
| **NCO-Index** | 452 | 427 | 387 | 416 | 453 | 444 | 314 | 451 | 451 | 453 | 453 |
| **Funktionalität des eingesetzten MDI** | 3,19 | 3,19 | 3,19 | 3,19 | 3,19 | 3,19 | 3,19 | 3,19 | 3,19 | 2 | 2 |
| **Dichte [kg/m³]** | 40 | 42 | 42 | 42 | 43 | 42 | 42 | 35 | 35 | 39 | 39 |
| **B2 Kleinbrennertest (DIN 4102-1 B2)** | bestanden | bestanden | bestanden | bestanden | bestanden | bestanden | bestanden | bestanden | bestanden | bestanden | Nicht bestanden |
| **MARHE [kW/m²]** | 84,3 | 81,8 | 76,5 | 62,1 | 98,0 | 63,9 | 82,5 | 87,6 | 88,1 | 120,2 | 132 |
| **TSP [m²/m²]** | 271,6 | 554,5 | 984,6 | 746,9 | 848,8 | 860,1 | 346,3 | 543,2 | 486,6 | 912,2 | 761 |
| **Druckfestigkeit F 10% [kPa]** | 278 | 270 | 257 | 227 | 289 | 256 | 302 | 192 | 180 | 246 | 296 |

**Fortsetzung Tabelle 1:**

| | **12** | **13** | | **14** | **15** |
|---|---|---|---|---|---|
| **Epoxy-Komponente** | BADGE2 | BADGE2 | | BADGE3 | BADGE3 |
| **Treibmittel** | AS | AS | | Wasser | AS + Wasser |
| **Flammschutzmittel** | - | Exolit RP6520 | | - | - |
| **Additivmischung** | AM-2 | AM-2 | | AM-2 | AM-2 |
| **Tempern für 3 Std. bei 200 °C (ja/nein)** | ja | ja | | nein | nein |
| **NCO-Index** | 445 | 445 | | | |
| **Funktionalität des eingesetzten MDI** | 3,19 | 3,19 | | 2,8 | 2,8 |
| **Dichte [kg/m³]** | 40 | 42 | | 28,1 | 36,4 |
| **B2 Kleinbrennertest (DIN 4102-1 B2)** | bestanden | bestanden | | bestanden | bestanden |
| **MARHE [kW/m²]** | 76 | 48 | | 75 | 74 |
| **TSP [m²/ m²]** | 571,5 | 339,5 | | 588,5 | 565,9 |
| **Druckfestigkeit F 10% [kPa]** | 250 | 205 | | 131 | 198 |

Die erfindungsgemäßen Beispiele 1 und 2 besitzen beide hervorragende mechanische Eigenschaften mit Druckfestigkeiten zwischen 270 und 280 kPa bei Dichten um 40 kg/m³. Im Cone Calorimeter Test wurden sehr niedrige MARHE- und TSP (**T**otal **S**moke **P**roduction)-Werte erreicht, die die hervorragenden brandhemmenden Eigenschaften der Schäume belegen. Beispiel 1 besitzt mit einem MARHE-Wert von 84,3 kW/m² auch eine sehr niedrige TSP von 2,4 m². Ähnlich verhält es sich bei Beispiel 2 mit einem MARHE-Wert von 81,8 kW/m² und einer TSP von 4,9 m².

In den erfindungsgemäßen Beispielen 3 und 4 wurden jeweils DPK als Flammschutzmittel hinzugefügt. Der resultierende Schaum aus Beispiel 3 wurde im Gegensatz zum Schaum aus Beispiel 4 nicht getempert. Beide Schäume zeigen bei gleicher Rohdichte hervorragende Cone Calorimeter Testergebnisse. Die MARHE-Werte sind mit 76,5 kW/m² (Beispiel 3, ungetempert) und 62,1 kW/m² (Beispiel 4, getempert) sehr niedrig, die Rauchgasdichte mit 8,7 m² (Beispiel 3) bzw. 6,6 m² (Beispiel 4) im erwarteten Bereich. Wie an den Cone Calorimeter Ergebnissen zu erkennen ist, hat das Tempern der Schäume nur einen geringen Einfluss auf die Brandeigenschaften. Wie aus Tabelle 1 hervorgeht sind ebenfalls die Druckfestigkeiten sehr gut.

Im erfindungsgemäßen Beispiel 5 wurde ebenfalls ein Schaum mit Ameisensäure als Treibmittel hergestellt, welcher allerdings nicht getempert wurde. Die Druckfestigkeit ist auch in diesem erfindungsgemäßen Beispiel 5 mit 289 kPa sehr hoch. Auch ohne einen Temperprozess wird ein sehr guter MARHE-Wert von 98 kW/m² erreicht.

Im erfindungsgemäßen Beispiel 10 wurde roter Phospor als Flammschutzmittel hinzugefügt. Im Cone Calorimeter Test wurde ein sehr niedriger MARHE-Wert von 63,9 kW/m² und TSP-Wert von 7,6 m² erreicht, was die hervorragend brandhemmenden Eigenschaften der Schäume belegt.

Im erfindungsgemäßen Beispiel 11 wurde EPN als Epoxidkomponente eingesetzt. Der resultierende Schaum besitzt hervorragende mechanische Eigenschaften mit einer Druckfestigkeit von 302 kPa. Im Cone Calorimeter Test wurden sehr niedrige MARHE (82,5 kW/m²) und TSP (3,06 m²)-Werte erreicht, die die hervorragenden brandhemmenden Eigenschaften der Schäume belegen.

In Beispielen 12 (ohne Flammschutzmittel) und 13 (mit rotem Phosphor als Flammschutzmittel) wurden alternative Additivmischungen eingesetzt und ebenfalls sehr gute MARHE und TSP-Werte erzielt.

In den erfindungsgemäßen Beispielen 6 und 7 wurde statt Ameisensäure, ein Gemisch aus Solkane 365/227 und Ameisensäure (Beispiel 6) bzw. ein Gemisch aus HFC-245fa und Ameisensäure verwendet (Beispiel 7). Das eingesetzte polymere MDI besaß eine Funktionalität von f = 3,19. Die resultierenden Schäume besitzen bei einer Rohdichte von 35 kg/m³ eine gute Druckfestigkeit von 192 kPa (Beispiel 6) bzw. 180 kPa (Beispiel 7). Die MARHE-Werte liegen mit 87,6 (Beispiel 6) bzw. 88,1 kW/m² (Beispiel 7) sehr niedrig und vergleichbar mit Schäumen die nur mit Ameisensäure geschäumt wurden. Auch die Rauchgasdichten sind mit 4,8 m² (Beispiel 6) bzw. 4,3 m² (Beispiel 7) im vergleichbaren Bereich.

Auch die Verwendung von Wasser bzw. Wasser / Ameisensäure-Gemische als Treibmitteln liefern Schäume mit besseren Eigenschaften als den Schäumen des Stands der Technik.

Der Schaum aus Vergleichsbeispiel 9a* und b* (Ameisensäure als Treibmittel) wurde in einem zweistufigen Prozess hergestellt. Zunächst wurde, wie in Vergleichsbeispiel 8 beschrieben, monomeres MDI bis zu einem bestimmten NCO-Wert vortrimerisiert und dieses Präpolymer erst anschließend in einen Schaum überführt. Die Funktionalität des eingesetzten MDI betrug f=2. Der Schaum aus Vergleichsbeispiel 9a* wurde für 3 Stunden bei 200 °C getempert. Die Cone Calorimeter Ergebnisse sind mit einem MARHE-Wert von 120,2 kW/m² und einer TSP von 8 m² deutlich schlechter im Vergleich zu den Werten aus den erfindungsgemäßen Beispielen, der Kleinbrennertest wurde jedoch bestanden. Der Schaum aus Vergleichsbeispiel 9b* wurde hingegen nicht getempert, in diesem Fall wurde der Kleinbrennertest nicht bestanden.

## Patentansprüche

1. Verfahren zur Herstellung eines hochtemperaturbeständigen Schaumstoffs umfassend die Umsetzung von
a) mindestens einem Gemisch aus organischen Polyisocyanaten und
b) mindestens einer, mindestens zwei Epoxidgruppen aufweisenden organischen Verbindung
in einer solchen Menge, die einem Äquivalentverhältnis von Isocyanatgruppen zu Epoxidgruppen von 1,2 : 1 bis 500 : 1 entspricht,
in Gegenwart von
c) gegebenenfalls mindestens einem die Isocyanat/Epoxid-Reaktion beschleunigenden Katalysator
e) gegebenenfalls von Hilfs- und Zusatzstoffen, **optional enthaltend mehrfunktionelle Hydroxyl- oder Aminogruppenhaltige Verbindungen e1),**
f) chemischen und/oder physikalischen Treibmitteln,
**dadurch gekennzeichnet,**
**dass** das Polyisocyanat a) mehr als 50 Gew.-% Polyphenyl-polymethylen-polyisocyanate mit einer Funktionalität f > 2 und der Strukturformel C₁₅H₁₀N₂O₂ [C₈H₅NO]ₙ wobei n= ganze Zahl > 0, enthält, und
**dass** die organische Verbindung b) einen oder mehrere Polyglycidylether ausgewählt aus der Gruppe bestehend aus Polyglycidylether von Bisphenol A, Bisphenol F und Novolak enthält,
**dass** die chemischen und/oder physikalischen Treibmittel f) mindestens eine Carbonsäure ausgewählt aus Ameisensäure und Essigsäure enthalten, oder dass das Treibmittel aus Wasser und optional einer oder mehreren Verbindung(en) ausgewählt aus der Gruppe enthaltend Kohlenwasserstoffe, Fluor-Kohlenstoffe und Fluor-Kohlenwasserstoffe besteht, und
**dass die Menge der Komponente a) so bemessen ist, dass das Äquivalentverhältnis von Isocyanatgruppen der Komponente a) zur Summe der Epoxidgruppen der Komponente b), Hydroxylgruppen und/oder Aminogruppen der Komponente e1) und den gegebenenfalls in der Komponente b) vorliegenden Hydroxylgruppen mindestens bei 1,2 : 1 liegt, und**
**dass** die Umsetzung in Abwesenheit einer als Stopper wirkenden Komponente d) erfolgt.

2. Verfahren gemäß Anspruch 1, **dadurch gekennzeichnet, dass** das Gemisch aus organischen Polyisocyanaten a) mehr als 55 Gew.-% Polyphenyl-polymethylen-polyisocyanate mit einer Funktionalität f > 2 und der Strukturformel C₁₅H₁₀N₂O₂ [C₈H₅NO]ₙ wobei n= ganze Zahl > 0, enthält.

3. Verfahren gemäß Anspruch 1 oder 2, **dadurch gekennzeichnet, dass** die organische Verbindung b) einen Polyglycidylether von Bisphenol F enthält.

4. Verfahren gemäß einem der vorangehenden Ansprüche, **dadurch gekennzeichnet, dass** der Katalysator in einer Menge von ≥ 0 bis < 2,0 Gew.-%, bezogen auf das Gesamtgewicht der Komponenten a) und b), eingesetzt wird.

5. Verfahren gemäß einem der vorangehenden Ansprüche, **dadurch gekennzeichnet, dass** der Schaumstoff < 0,8 Gew.-% Urethangruppen und/oder Harnstoffgruppen, bezogen auf das Gesamtgewicht der Komponenten, stammend aus der Reaktion des Polyisocyanats a) mit e1) mehrfunktionellen Hydroxylgruppen- und/oder Aminogruppen-haltigen Verbindungen enthält.

6. Verfahren gemäß einem der vorangehenden Ansprüche, **dadurch gekennzeichnet, dass** die weiteren Hilfs- und Zusatzstoffe e) maximal in einer solchen Menge mitverwendet werden, dass das Verhältnis des Gewichts aller Hydroxyl- und / oder Aminogruppen - haltigen Verbindungen e1) zu dem Gewicht der Epoxidkomponente b) kleiner ist als 30:70 und bevorzugt maximal 28:72, besonders bevorzugt maximal 25:75 und ganz besonders bevorzugt maximal 20:80 beträgt.

7. Verfahren gemäß einem der vorangehenden Ansprüche, **dadurch gekennzeichnet, dass** die weiteren Hilfs- und Zusatzstoffe e) maximal in einer solchen Menge mitverwendet werden, dass weniger als 28 Gew.-%, bevorzugt weniger als 25 Gew-% an der Komponente e1), bezogen auf das Gesamtgewicht der Komponenten b) und e1), eingesetzt werden und der EPIC-Schaum ≥ 0,01 bis ≤ 1 Gew.%, bevorzugt ≥ 0,01 bis < 0,8 Gew.% an Urethan- und/oder Harnstoffgruppen stammend von aus der Reaktion des Polyisocyanats a) mit der Komponente e), bezogen auf das Gesamtgewicht des Schaums, enthält.

8. Verfahren zur Herstellung hochtemperaturbeständiger Schaumstoffe gemäß einem der vorangehenden Ansprüchen, enthaltend die Schritte
(i) Mischen der Komponenten a) - f)
(ii) Reaktion der Komponenten a) - f) im one-shot Verfahren.

9. Verfahren gemäß einem oder mehreren der vorangehenden Ansprüche, **dadurch gekennzeichnet, dass** nach dem Aufschäumen in den geschäumten Zustand eine nachträgliche Temperaturbehandlung zwischen 70 und 250 °C oder keine Temperaturbehandlung vorgenommen wird.

10. Verfahren nach Anspruch 9, **dadurch gekennzeichnet, dass** eine aminische Verbindung ausgewählt aus der Gruppe bestehend aus Bortrichlorid-tert.-Amin-Addukten, N,N-Dimethylbenzylamin, N,N-Methyldibenzylamin, einer Verbindung mit mindestens zwei gegenüber Isocyanaten reaktiven Wasserstoffatomen und einem Molekulargewicht von kleiner 500 g/mol, wobei mindestens eines der gegenüber Isocyanaten reaktiven Wasserstoffatome zu einer primären oder sekundären Aminogruppe gehört, und Mischungen daraus, zugesetzt wird.

11. Hochtemperaturbeständiger Schaumstoff erhältlich durch ein Verfahren gemäß einem der Ansprüche 1 bis 10.

12. Verwendung der hochtemperaturbeständigen Schaumstoffe gemäß Anspruch 11 als Füllschaum für Hohlräume, als Füllschaum zur Elektroisolierung, als Kern von Sandwich-Konstruktionen, zur Herstellung von Konstruktionsmaterialien für Innen- und Außenanwendungen jeglicher Art, zur Herstellung von Konstruktionsmaterialien für den Fahrzeug-, Schiff-, Flugzeug- und Raketenbau, zur Herstellung von Flugzeuginnen- und - außenbauteilen, zur Herstellung von Dämmmaterialien jeglicher Art, zur Herstellung von Dämmplatten, Rohr- und Behälterisolierungen, zur Herstellung von schallabsorbierenden Materialien, zum Einsatz in Motorräumen, zur Herstellung von Schleifscheiben und zur Herstellung von Hochtemperaturisolierungen und schwer entflammbaren Isolierungen.

13. Verwendung der schaumfähigen Mischungen vor dem Ende der Verschäumung zum hochtemperaturbeständigen Schaumstoff gemäß Anspruch 11 zum Verkleben von Substraten, **insbesondere** zum Verkleben von Stahl- und Kupferblechen **und** Kunststoffplatten, **insbesondere** Polybutylenterephthalat-Platten.

14. Hohlräume, Elektroisolierungen, Kerne von Sandwich-Konstruktionen, Sandwich-Konstruktionen, Konstruktionsmaterialien für Innen- und Außenanwendungen jeglicher Art, Konstruktionsmaterialien für den Fahrzeug-, Schiff-, Flugzeug- und Raketenbau, Flugzeuginnen- und -außenbauteile, Dämmmaterialien jeglicher Art, Dämmplatten, Rohr- und Behälterisolierungen, schallabsorbierende Materialien, Dämm- und Isoliermaterialien in Motorräumen, Schleifscheiben, Hochtemperaturisolierungen und schwer entflammbare Isolierungen, **dadurch gekennzeichnet, dass** sie die hochtemperaturbeständigen Schaumstoffe gemäß Anspruch 11 enthalten oder aus ihnen bestehen.

15. Verklebungen von Substraten, z.B. Stahl-, Aluminium- und Kupferblechen, Kunststoffplatten, z.B. Polybutylenterephthalat-Platten, **dadurch gekennzeichnet, dass** sie die hochtemperaturbeständigen Schaumstoffe gemäß Anspruch 11 enthalten oder aus ihnen bestehen.

## Claims

1. A process for preparing a high-temperature resistant foam, comprising the reaction of
a) at least one mixture of organic polyisocyanates, and
b) at least one organic compound having at least two epoxy groups
in an amount that corresponds to an equivalent ratio of isocyanate groups to epoxy groups of from 1.2:1 to 500:1,
in the presence of
c) optionally at least one catalyst accelerating the isocyanate/epoxide reaction,
e) optionally in the presence of auxiliary agents and additives, optionally containing multifunctional compounds containing hydroxy or amino groups e1),
f) chemical and/or physical blowing agents,
**characterized in that**
said polyisocyanate a) contains more than 50% by weight of polyphenyl polymethylene polyisocyanates having a functionality f > 2 and the structural formula C₁₅H₁₀N₂O₂ [C₈H₅NO]ₙ, where n = integer > 0, and
that the organic compound b) contains one or more polyglycidyl ethers selected from the group consisting of the polyglycidyl ethers of bisphenol A, bisphenol F and novolac,
that the chemical and/or physical blowing agents f) include at least one carboxylic acid selected from formic acid and acetic acid, or that said blowing agent consists of water and optionally one or more compounds selected from the group containing hydrocarbons, fluorocarbons, and fluorohydrocarbons, and
that the amount of component a) is such that the equivalent ratio of isocyanate groups of component a) to the total of the epoxy groups of component b), hydroxy groups and/or amino groups of component e1) and the hydroxy groups that are optionally present in component b) is at least 1.2:1, and
that the reaction proceeds in the absence of a component d) acting as a stopper.

2. The process according to claim 1, **characterized in that** said mixture of organic polyisocyanates a) contains more than 55% by weight polyphenyl polymethylene polyisocyanates with a functionality f > 2 and the structural formula C₁₅H₁₀N₂O₂ [C₈H₅NO]ₙ, where n = integer > 0.

3. The process according to claim 1 or 2, **characterized in that** the organic compound b) contains a polyglycidyl ether of bisphenol F.

4. The process according to any of the preceding claims, **characterized in that** said catalyst is employed in an amount of from ≥ 0 to < 2.0% by weight, based on the total weight of components (a) and (b).

5. The process according to any of the preceding claims, **characterized in that** said foam contains < 0.8% by weight of urethane groups and/or urea groups derived from the reaction of the polyisocyanate a) with e1) multifunctional compounds containing hydroxy groups and/or amino groups, based on the total weight of the components.

6. The process according to any of the preceding claims, **characterized in that** said further auxiliary agents and additives e) are included maximally in such an amount that the ratio of the weight of all compounds containing hydroxy and/or amino groups e1) to the weight of epoxy component b) is smaller than 30:70 and preferably at most 28:72, more preferably at most 25:75, and even more preferably at most 20:80.

7. The process according to any of the preceding claims, **characterized in that** said further auxiliary agents and additives e) are included maximally in such an amount that less than 28% by weight, preferably less than 25% by weight, of component e1) is employed, based on the total weight of components b) and e1), and said EPIC foam contains ≥ 0.01 to ≤ 1% by weight, preferably ≥ 0.01 to < 0.8% by weight, of urethane and/or urea groups derived from the reaction of polyisocyanate a) with component e), based on the total weight of the foam.

8. The process for preparing high-temperature resistant foams according to any of the preceding claims, containing the steps of
(i) mixing the components a) to f),
(ii) reacting the components a) to f) in a one-shot process.

9. The process according to one or more of the preceding claims, **characterized in that**, after said foaming to the foamed state, a subsequent temperature treatment is performed at from 70 to 250 °C, or no temperature treatment is performed.

10. The process according to claim 9, **characterized in that** an aminic compound selected from the group consisting of boron trichloride tert. amine adducts, N,N-dimethylbenzylamine, N,N-methyldibenzylamine, a compound with at least two isocyanate-reactive hydrogen atoms and a molecular weight of less than 500 g/mol, wherein at least one of said isocyanate-reactive hydrogen atoms belongs to a primary or secondary amino group, and mixtures thereof, is added.

11. A high-temperature resistant foam obtainable by a process according to any of claims 1 to 10.

12. Use of the high-temperature resistant foams according to claim 11 as a filling foam for hollow spaces, as a filling foam for electric insulation, as a core of sandwich constructions, for the preparation of construction materials for all kinds of interior and exterior applications, for the preparation of construction materials for vehicle, ship, airplane and rocket construction, for the preparation of airplane interior and exterior construction parts, for the preparation of all kinds of insulation materials, for the preparation of insulation plates, tube and container insulations, for the preparation of sound-absorbing materials, for use in engine compartments, for the preparation of grinding wheels, and for the preparation of high-temperature insulations and hardly flammable insulations.

13. Use of the foamable mixtures before the foaming to the high-temperature resistant foam according to claim 11 is complete for adhesively bonding substrates, especially for adhesively bonding steel and copper plates, and plastic sheets, especially polybutylene terephthalate sheets.

14. Hollow spaces, electric insulations, cores of sandwich constructions, sandwich constructions, construction materials for all kinds of interior and exterior applications, construction materials for vehicle, ship, airplane and rocket construction, airplane interior and exterior construction parts, all kinds of insulation materials, insulation plates, tube and container insulations, sound-absorbing materials, damping and insulation materials in engine compartments, grinding wheels, high-temperature insulations, and hardly flammable insulations, **characterized by** containing or consisting of the high-temperature resistant foams according to claim 11.

15. Bondings between substrates, e.g., steel, aluminum and copper plates, plastic sheets, e.g., polybutylene terephthalate sheets, **characterized by** containing or consisting of the high-temperature resistant foams according to claim 11.

## Revendications

1. Procédé pour préparer une mousse plastique résistante à haute température, comprenant la réaction entre
a) au moins un mélange de polyisocyanates organiques, et
b) au moins un composé organique ayant au moins deux groupes époxydes en une quantité qui correspond à un rapport d'équivalent de groupes isocyanates à groupes époxydes de 1,2 : 1 à 500 : 1,
en présence de
c) éventuellement au moins un catalyseur accélérant la réaction isocyanate/époxyde,
e) éventuellement auxiliaires et additifs, contenant éventuellement des composés multifonctionnels contenant des groupes hydroxy ou amino e1),
f) agents d'expansion chimiques et/ou physiques,
**caractérisé en ce que**
ledit polyisocyanate a) contient plus de 50 % en poids de polyphényle-polyméthylène-polyisocyanates avec une fonctionnalité f > 2 et la formule structurelle C₁₅H₁₀N₂O₂ [C₈H₅NO]ₙ, où n est un nombre entier > 0, et
ledit composé organique b) contient un ou plusieurs polyglycidyléthers choisis dans le groupe consistant en polyglycidyléthers de bisphénol A, bisphénol F et novolaque,
lesdits agents d'expansion chimiques et/ou physiques contiennent au moins un acide carboxylique choisi parmi l'acide formique et l'acide acétique, ou que ledit agent d'expansion consiste en eau et éventuellement un ou plusieurs composés choisis dans le groupe consistant en hydrocarbures, fluorocarbures et hydrocarbures fluorés, et
la quantité du composant a) est telle que le rapport d'équivalent de groupes isocyanates du composant a) à la somme des groupes époxydes du composant b), des groupes hydroxy et/ou amino du composant e1) et les groupes hydroxy éventuellement présents dans le composant b) est au moins 1,2 : 1, et
ladite réaction est effectuée en l'absence d'un composant à effet d'agent d'arrêt d).

2. Procédé selon la revendication 1, **caractérisé en ce que** ledit mélange de polyisocyanates organiques a) contient plus de 55 % en poids polyphényle-polyméthylène-polyisocyanates avec une fonctionnalité f > 2 et la formule structurelle C₁₅H₁₀N₂O₂ [C₈H₅NO]ₙ, où n est un nombre entier > 0.

3. Procédé selon la revendication 1 ou 2, **caractérisé en ce que** ledit composé organique b) contient un polyglycidyléther de bisphénol F.

4. Procédé selon l'une quelconque des revendications précédentes, **caractérisé en ce que** ledit catalyseur est utilisé en une quantité de ≥ 0 à < 2,0 % en poids, par rapport au poids total des composants a) et b).

5. Procédé selon l'une quelconque des revendications précédentes, **caractérisé en ce que** ladite mousse plastique contient < 0,8 % en poids de groupes uréthane et/ou groupes urée, par rapport au poids total des composants résultant de la réaction du polyisocyanate a) avec e1) des composés multifonctionnels contenant des groupes hydroxy et/ou amino.

6. Procédé selon l'une quelconque des revendications précédentes, **caractérisé en ce que** lesdits auxiliaires et additifs supplémentaires e) sont inclus au plus en une telle quantité que le rapport du poids de tous les composés contenant des groupes hydroxy et/ou amino e1) au poids du composant époxyde b) est inférieur à 30 : 70, de préférence au plus 28:72, de préférence encore au plus 25:75, et de préférence encore au plus 20:80.

7. Procédé selon l'une quelconque des revendications précédentes, **caractérisé en ce que** lesdits auxiliaires et additifs supplémentaires e) sont inclus au plus en une telle quantité que moins de 28 % en poids, de préférence moins de 25 % en poids, du composant e1), par rapport au poids total des composants b) et e1), est utilisé, et la mousse EPIC contient ≥ 0,01 à ≤ 1 % en poids, de préférence ≥ 0,01 à ≤ 0,8 % en poids, de groupes uréthane et/ou groupes urée résultant de la réaction du polyisocyanate a) avec le composant e), par rapport au poids total de la mousse plastique.

8. Procédé pour préparer des mousses plastiques résistantes à haute température selon l'une quelconque des revendications précédentes, contenant les étapes consistant à
(i) mélanger les composants a) à f),
(ii) faire réagir les composants a) à f) dans un procédé en une étape.

9. Procédé selon l'une quelconque des revendications précédentes, **caractérisé en ce qu'**après l'expansion dans l'état expansé, un traitement thermique ultérieur entre 70 et 250 °C ou pas de traitement thermique est effectué.

10. Procédé selon la revendication 9, **caractérisé en ce qu'**un composé aminique choisi dans le groupe consistant en adduits de trichlorure de bore et d'amine tertiaire, N,N-diméthylbenzylamine, N,N-méthyldibenzylamine, un composé avec au moins deux atomes d'hydrogène réactifs avec un isocyanate et un poids moléculaire de moins de 500 g/mol, dans lequel au moins un desdits atomes d'hydrogène réactifs avec un isocyanate appartient à un groupe amino primaire ou secondaire, et des mélanges de ceux-ci, est ajouté.

11. Mousse plastique résistante à haute température pouvant être obtenue par un procédé selon l'une quelconque des revendications 1 à 10.

12. Utilisation des mousses plastiques résistantes à haute température selon la revendication 11 comme mousse de remplissage pour cavités, mousse de remplissage pour isolation électrique, comme âme de constructions sandwich, pour la production de matériaux de construction pour applications internes et externes de tout type, pour la production de matériaux de construction pour la construction de véhicules, navale, aéronautique et de fusées, pour la production d'éléments internes et externes d'avions, pour la production de matériaux isolants de tout type, pour la production de plaques isolantes, d'isolations de tubes et de récipients, pour la production de matériaux d'absorption du son, pour l'utilisation dans les compartiments moteur, pour la production de disques abrasifs, et pour la production d'isolations haute température et d'isolations difficilement inflammables.

13. Utilisation des mélanges expansibles avant la fin de l'expansion en mousse plastique résistante à haute température selon la revendication 11 pour coller des substrats, notamment pour coller des tôles d'acier et de cuivre et des plaques de plastique, notamment des plaques de poly(téréphthalate de butylène).

14. Cavités, isolations électriques, âmes de constructions sandwich, constructions sandwich, matériaux de construction pour applications internes et externes de tout type, matériaux de construction pour la construction de véhicules, navale, aéronautique et de fusées, éléments internes et externes d'avions, matériaux isolants de tout type, plaques isolantes, isolations de tubes et de récipients, matériaux d'absorption du son, matériaux isolants utilisés dans les compartiments moteur, disques abrasifs, isolations haute température et isolations difficilement inflammables, **caractérisés en ce qu'**il contiennent ou consistent en les mousses plastiques résistantes à haute température selon la revendication 11.

15. Collages de substrats, par exemple des tôles d'acier, d'aluminium et de cuivre, des plaques de plastique, par exemple des plaques de poly(téréphtalate de butylène), **caractérisés en ce qu'**il contiennent ou consistent en les mousses plastiques résistantes à haute température selon la revendication 11.
